(19) Europäisches Patentamt
European Patent Office
Office européen des brevets

(11) **EP 2 189 970 A2**

(12) **EUROPEAN PATENT APPLICATION**

(43) Date of publication:
**26.05.2010 Bulletin 2010/21**

(51) Int Cl.:
*G09G 3/36* (2006.01)　　*G06F 3/14* (2006.01)

(21) Application number: **09176961.2**

(22) Date of filing: **22.10.2004**

(84) Designated Contracting States:
**AT BE BG CH CY CZ DE DK EE ES FI FR GB GR HU IE IT LI LU MC NL PL PT RO SE SI SK TR**

(30) Priority: **04.12.2003 GB 0328163**

(62) Document number(s) of the earlier application(s) in accordance with Art. 76 EPC:
**04791575.6 / 1 711 856**

(71) Applicant: **Shearline Precision Engineering Limited**
**Ely**
**Cambridgeshire CB7 4EX (GB)**

(72) Inventors:
• **Gallen, Niall Anthony**
  **Cambridge, Cambridgeshire CB1 7TP (GB)**
• **Lowe, Anthony Cyril**
  **Braishfield, Hampshire SO51 0PQ (GB)**

• **Bayley, Paul Andrew**
  **Hereford, Hereford and Worcester HR4 0LJ (GB)**
• **Smartt, Nicholas Patrick**
  **Cambridge, Cambridgeshire CB1 3LS (GB)**
• **Garbutt, Benjamin David**
  **Minsterworth, Gloucestershire GL2 8JP (GB)**

(74) Representative: **Harris, David James**
  **Barker Brettell LLP**
  **138 Hagley Road**
  **Edgbaston**
  **Birmingham**
  **B16 9PW (GB)**

Remarks:
This application was filed on 24.11.2010 as a divisional application to the application mentioned under INID code 62.

(54) **Display**

(57)　　A display comprises a display device having an image output surface at which an image is displayed as a spaced array of pixel elements, a light transmitting element having a viewing surface, the light transmitting element arranged to receive light from the display device and display the received light on the viewing surface, the light transmitting element having a polarising layer arranged in an optical path between the display device and the viewing surface, wherein the polarising layer is arranged to attenuate unpolarised ambient light received from outside the display while substantially transmitting polarised light received from the display device. The display is a tiled display and the scanning direction for each panel in a column alternates between up and down.

Fig. 22

EP 2 189 970 A2

**Description**

This invention relates to displays.

The technology behind flat-panel displays, such as liquid crystal (LCD) or plasma displays, has advanced to the stage where a single display can be economically manufactured to about the screen size of a medium size domestic television set. To increase the display size of a single-unit display beyond this level introduces greater costs, lower manufacturing yields and other significant technical problems.

To provide larger displays, therefore, a hybrid technology has been developed whereby multiple smaller rectangular displays are tessellated to form the required overall size. For example, a 2 x 2 tessellated array of 15 inch diagonal displays, with appropriate addressing electronics to route pixel information to the appropriate sub-display, would provide a 30 inch diagonal display.

A drawback of this type of arrangement is that the active area of an individual display, that is to say, the area of the front face of the display on which pixel information is displayed, does not extend to the very edge of the physical area of the display. The technologies used, whether plasma, liquid crystal or other, require a small border around the edge of the active display area to provide interconnections to the individual pixel elements and to seal the rear to the front substrate. This border can be as small as a few millimetres, but still causes unsightly dark bands across a tessellated display.

Various solutions have been proposed to this problem, most of which rely on bulk optic or fibre optic image guides to translate or expand the image generated at the active area of the individual sub-displays.

For example, US-A-4 139 261 (Hilsum) uses a wedge structure image guide formed of a bundle of optical fibres to expand the image generated by a panel display so that by abutting the expanded images, the gap between two adjacent panels, formed of the two panels' border regions, is not visible. The input end of each fibre is the same size or less than a pixel element. The optical fibres are aligned, at their input ends, with individual pixel elements of the panel display, so that the pixel structure of the display is carried over to the output plane of the image expander. Other image guides formed in this way may translate the image to provide a border-less abutment between a pair of adjacent panels. Various types of light transmission guide may be used, such as rigid or semi-rigid light transmission guides. It has been proposed that the image guides could be fabricated from polymer materials, for ease of manufacture.

When in use, ambient light from outside a display striking the viewing surface of the described display screens may be guided down the image guide into the display apparatus. A portion of this light may be reflected at the channel/air interface at the input ends of the image guide due to Fresnel reflections and will be guided back out through the image guide to the viewer, thereby undesirably reducing the contrast of the displayed image.

An aspect of the present invention provides a display comprising a display device having an image output surface at which an image is displayed as a spaced array of pixel elements, a light transmitting element having a viewing surface, the light transmitting element arranged to receive light from the display device and display the received light on the viewing surface, the light transmitting element having a polarising layer arranged in an optical path between the display device and the viewing surface, wherein the polarising layer is arranged to attenuate unpolarised ambient light received from outside the display while substantially transmitting polarised light received from the display device.

This arrangement advantageously reduces the effects of ambient light on the image quality at the image output surface of the display by providing a polariser which attenuates the unpolarised ambient light while substantially preserving the intensity of the polarised light emitted from the display device.

In order for an LCD based display to display an image in which pixels intended to have the same pixel value exhibit the same luminance, the LCD panel should be illuminated uniformly across its entire active area. However, the light emitting elements, for instance fluorescent lamps, present in a backlight apparatus do not provide uniform illumination across the entire area of the backlight because some areas of the backlight apparatus do not emit light. This is because the light emitting elements include non-emitting parts, and the light emitting elements cannot be provided directly adjacent to one another because separation is required between the end electrodes of adj acent lamps.

An aspect of the present invention provides a backlit display comprising a backlight having light emitting regions and non-emitting regions; a modulator, arranged to receive light emitted from the backlight; and light redirecting means, arranged to redirect a portion of the light emitted from the light emitting regions of the backlight onto areas of the modulator in closest relationship to the non-emitting regions of the backlight.

This arrangement advantageously improves the uniformity of the illumination provided by a backlight to a modulator such as an LCD panel, in turn enabling a more uniform brightness of image at the image output surface of a display, while not substantially reducing the average intensity of illumination across the modulator surface.

When attaching an LCD panel and an image guide together, it is highly desirable for the LCD panel to be accurately located with respect to the input face of an image guide. For reasons of serviceability, the LCD should ideally not be bonded with a transparent adhesive to the image guide (as it would then be difficult or impossible to separate these components for repairs or cleaning without causing damage), but instead should be mechanically held in close proximity to, and in registration with, the image guide. Furthermore, it should be noted that the expansion coefficient of the glass of the LCD is significantly lower than that of a polymeric image guide, and it is important that this difference in expansion should not result in a level of stress being experienced by the LCD that will cause distortion of the LCD over the range of temperatures at which the display may be required to operate.

An aspect of the invention provides a display comprising a display panel having an image output surface at which an image is displayed as a spaced array of pixel elements; an image guide comprising a plurality of light transmission guides each having an input end and an output end, the input ends of the light transmission guides being arranged to receive light from respective groups of one or more pixel elements, and a base frame surrounding the input ends of the light transmission guides; a first frame having an aperture, the first frame being rigidly attached to the base frame, the display panel being positioned against the image guide within the aperture of the first frame; and a second frame having a smaller aperture than the first frame, the second frame overlapping the display panel and applying pressure to the display panel thereby retaining the display panel in close proximity to the image guide, the second frame being elastically coupled to the first frame.

This arrangement advantageously provides a firm, but non-permanent mechanism for securing a display panel, such as an LCD panel, and an image guide together without causing damage to either the display panel or the image guide.

In order to allow the input of an image guide to be aligned correctly with a large array of pixel elements on a panel display, it is appropriate that the input ends of the light transmission guides are maintained in the correct relative positions, often as a rectangular array of pixel positions. Whatever means is used for registering the input ends of the light transmission guides in their correct relative positions, a problem can arise when the temperature of the display arrangement changes.

Most commonly, panel displays are fabricated of glass or a closely related material. The surface of the panel display may have a thin layer or film of another material coupled (e.g. adhered) to it (for instance polarising filters for a Liquid Crystal (LC) display). This layer may have different thermal expansion properties to those of the underlying surface. Of course the skilled person will understand that where this is the case, the layer will expand or contract (e.g. stretch or compress) with the underlying surface when the underlying surface expands in response to temperature variations. Image guides proposed so far tend to use polymer materials for the light transmission guides and/or for an arrangement (if one is used) for registering the input ends of the light transmission guides in the correct relative positions. A problem therefore arises because the thermal expansion properties of glass and polymer materials are different.

Consider an example display where the different thermal expansions of the input end of the image guide and of the display substrate mean that the image guide has expanded across its width by one pixel-width more than the panel substrate. This could have two major effects on the image displayed at the output of the image guide.

The first is a change to the spatial resolution of the display. At positions within the display area, some light transmission guides could be receiving substantially equal amounts of light from two adjacent pixel elements. This has a low-pass spatial filtering effect on the displayed image, and this effect will vary across the display area. The second is that the outermost light transmission guides will be receiving no light at all, as they will have expanded beyond the display area of the panel. This will cause an unsightly dark line at the output of the image guides.

An aspect of the invention provides a display comprising a display device having an image output surface at which an image is displayed as a spaced array of pixel elements, an image guide coupled to the image output surface of the display device and comprising a plurality of light transmission guides each having an input end and an output end, the input ends of the light transmission guides being arranged relative to one another so that groups of one or more light transmission guides receive light from respective groups of one or more pixel elements, in which, for a cluster comprising at least a subset of the light transmission guides, at the outer periphery of the cluster, the input ends of the light transmission guides are surrounded by an inner frame having optical properties substantially similar to the optical properties of the light transmission guides and having an input surface arranged to receive light from the image output surface of the display device, and an outer frame having thermal expansion properties substantially similar to the thermal expansion properties of the light transmission guides, the inner frame being optically coupled to each light transmission guide adjacent thereto and comprising a reflective layer covering at least the surfaces of the inner frame opposite to the input surface of the inner frame and the surfaces of the inner frame adjacent to the outer frame, light entering the inner frame and impinging on the reflective layer being reflected to exit the inner frame via the portion of the inner frame optically coupled to adjacent light transmission guides or via the input face of the inner frame.

This arrangement advantageously improves the optical performance of an array of light transmission guides bounded by an optically similar frame which is bounded in turn by another, optically dissimilar frame. The reflective layer serving to recycle, rather than absorb, light entering the optically similar frame, and also serving to increase design freedom by making the operation of the light transmission guides and the inner frame independent of the optical properties of the outer frame.

The front of a tiled display screen is composed of a number of image guides, each image guide comprising a plurality of light transmission guides, which may be composed of a polymeric substance. In order to construct large tiled arrays, a rigid framework should preferably be provided to support the image guides and maintain them in close alignment. The typical materials (e.g. polymers) used to make the image guides are not ideal materials from which to construct this structure due to relatively low stiffness, poor long-term stability, and the large cross-sectional area which would be required to provide sufficient rigidity to a large display screen. A metal or reinforced plastic framework is a more suitable solution, but the different coefficient of thermal expansion would mean the stresses on the front viewing surface due to thermal expansion could be excessive.

If a more rigid material with a substantially different coefficient of thermal expansion is to be employed, a means is required to support and accurately align the image guides without imposing excessive internal stresses on the front viewing surface or the supporting framework.

The front face of the individual image guides should preferably be held to tight tolerances in a single plane, to ensure there is no visible step between the front faces of the different image guides. Even a small variation from the nominal plane of the front viewing surface could be seen by eye as a seam between the display modules.

Furthermore, the image guides should preferably be constrained in such a way as to prevent gaps opening up between image guides over the working temperature range of the display.

An aspect of the invention provides a display comprising a plurality of image guides, each image guide comprising a plurality of light transmission guides having an input and an output end, and a base frame having a coefficient of thermal expansion substantially matching that of the light transmission guides, the base frame surrounding the input ends of the light transmission guides; means for coupling the plurality of image guides into an array in which the output surfaces of the image guides form a continuous surface; and a supporting frame, the supporting frame having greater rigidity than the base frames, and a different coefficient of thermal expansion to the base frames, the base frames being coupled to the supporting frame by a connecting means allowing relative movement between the base frames and the supporting frame in a plane substantially parallel to the output surfaces of the image guides.

This arrangement advantageously provides a mechanism for coupling an array of display panels together in a substantially rigid framework while building in a sufficient tolerance for differential thermal expansion between the elements of the tiled array over the range of operating temperatures required for the display.

Display screens are required to meet certain minimum standards in terms of emissions of radiated electromagnetic energy. In order to satisfy these standards, display screens are often provided with a transparent conducting layer attached to the front of the display and bonded to a conducting shield to form a full enclosure around the screen electronics.

An aspect of the invention provides a display comprising a display device having an image output surface at which an image is displayed as a spaced array of pixel elements; an image guide coupled to the image output surface of the display device and comprising a plurality of light transmission guides each having an input end and an output end, the input ends of the light transmission guides being arranged relative to one another so that groups of one or more light transmission guides receive light from respective groups of one or more pixel elements; in which electrically conductive material is provided between and along at least a portion of the length of at least a subset of the light transmission guides, the electrically conductive material being arranged to absorb electromagnetic radiation emitted from the display device, the electrically conductive material between light transmission guides in separate regions of the image guide being electrically connected together.

This arrangement advantageously provides a mechanism for absorbing electromagnetic radiation emitted from the internal circuitry of a display device by the use of electrically conducting material connected together and distributed throughout the image guide of a display, between the light transmission guides, the conducting material serves to attenuate electromagnetic radiation which it intercepts.

As described above, larger displays can be produced by tiling display panels together. With appropriate drive electronics, a section of a whole image can be presented to each display panel, such that the tiled display shows the whole picture.

However, where the individual display panels are separately controlled by drive electronics associated with respective display panels, visual artefacts may occur at the boundaries between display panels where the sections of the image displayed at the separate display panels are updated to a new frame at different times.

It is possible to disguise or remove the motion artefacts using image processing (for instance temporal interpolation) of successive image frames or incurring a delay of one frame time between each row of panels. The latter method could involve, for example, making the third row down in a tiled display begin frame one when the top row begins frame three. This would satisfy the avoidance of a discontinuity at the boundary between rows without turning the LCD panels upside down, but would cause an apparent 'tilt' on the image as it moves, and create a lip-sync problem with the sound system on the display, since the lower rows would be showing an image that was shown on the top row several frames (perhaps, for a large display, 100s of milliseconds) earlier.

An aspect of the invention provides a tiled display comprising a plurality of display panels formed into a plurality of rows and arranged to form a single image output surface, each display operable to display a plurality of lines of pixels, display control means, arranged to refresh each display panel on a line by line basis in accordance with a refresh pattern, in which the refresh pattern for pairs of vertically adjacent display panels are such that a lower region of an upper display panel of the pair is refreshed at substantially the same time as an upper region of a lower display panel of the pair.

This arrangement advantageously provides a reduction in a perceived visual artefact resulting from adjacent portions of horizontally adjacent display panels being refreshed at different times by swapping the refresh direction between one row of panels to the next from a top to bottom refresh to a bottom to top refresh, ensuring that adjacent portions of vertically adjacent display panels are refreshed at substantially the same time.

A display may use a backlight and one or more light modulating or image modifying devices between the backlight and the image output surface of the display. At each boundary between components in the optical path from the backlight to the image output surface, there will be insertion (reflection) and transmission light losses due to Fresnel reflections. Additionally, at these boundaries, and at other reflecting surfaces within the display there will be losses due to scatter caused by imperfections in the surfaces. Both these losses will be dependent on the optical properties, and most importantly the refractive index, of the materials used. Because the refractive index of polymer materials increases at shorter wavelengths towards the blue end of the visible spectrum, reflection and scatter losses will be greater in the blue region than in the red region of the spectrum, resulting in a yellow cast to the colour of the transmitted light. This problem may be exacerbated by preferential absorption of blue light by the materials used in construction of an LCD (including polarisers) and the light guides which may be used in the display.

An aspect of the invention provides a backlit display comprising a transmissive display device having an image output surface at which an image is displayed as a spaced array of pixel elements, the spectral loss of the display device in the visible spectrum being greatest toward the blue end of the visible spectrum, and a backlight providing illumination of the display device, in which the emission of light from the backlight in the visible spectrum predominates at the blue end of the visible spectrum.

Biasing the emission spectrum of the backlight in the blue region of the visible spectrum of light compensates for the preferential absorption of blue light by the display device, reducing a potential yellow cast to a displayed image.

Embodiments of the invention will now be described, by way of example only, with reference to the accompanying drawings in which:

Figure 1 is a schematic isometric rear view of a tiled array of display panels;
Figure 2 is a schematic isometric front view of the array of Figure 1;
Figure 3 is a schematic side view of a display comprising a light source, a collimator/homogeniser, a display panel and an image guide;
Figure 4 schematically illustrates a fluorescent lamp backlight apparatus;
Figures 5A and 5B schematically illustrate incident luminance profiles at the plane of a modulation surface illuminated by a backlight;
Figure 6 schematically illustrates light emission from a fluorescent lamp;
Figure 7 schematically illustrates an improved backlight apparatus comprising refractive surfaces disposed between a fluorescent lamp and a modulation surface;
Figure 8 schematically illustrates an improved backlight apparatus comprising reflective surfaces disposed between a fluorescent lamp and a modulation surface;
Figure 9 schematically illustrates an improved backlight apparatus comprising reflective surfaces perpendicular to the plane of a modulation surface and in a close spatial relationship to non-emissive regions of the fluorescent lamp;
Figure 10A schematically illustrates an improved backlight apparatus comprising reflective surfaces on a louvered structure in close relationship to non-emissive regions of the fluorescent lamp;
Figure 10B schematically illustrates air flow through the louvered structures of Figure 10A;
Figure 11 schematically illustrates an attachment mechanism for coupling an LCD panel to a respective image guide;
Figure 12A to 12C schematically illustrate the various "layers" of which the attachment mechanism of Figure 11 is composed;
Figure 13 schematically illustrates a portion of an image guide comprising light transmission guides and bordered by a frame;
Figure 14 is a schematic side view of the image guide and frame of Figure 13;
Figure 15A schematically illustrates inner and outer frames surrounding an image guide, the inner frame being composed of a continuous sheet of material;
Figure 15B schematically illustrates inner and outer frames surrounding an image guide, the inner frame being composed of a series of truncated light transmission guides;
Figure 16 schematically illustrates the optical characteristics of a plurality of light transmission guides bordered by an inner frame having an absorbing layer at its output end, the inner frame being isolated from the outer frame;
Figure 17 schematically illustrates the optical characteristics of a plurality of light transmission guides bordered by an inner frame having an absorbing layer at its output end, the inner frame being fixed into the outer frame;
Figure 18 schematically illustrates the optical characteristics of a plurality of light transmission guides bordered by an inner frame having a reflective layer covering all its surfaces except those surfaces being coupled to the light transmission guides and the input surface of the inner frame;
Figure 19 schematically illustrates a single image guide having a frame surrounding the input face of the image guide;

Figure 20 schematically illustrates a tiled array of image guides held together by a supporting structural framework;

Figure 21 schematically illustrates a mechanism by which each image guide can be securely coupled to the supporting structural framework of Figure 20;

Figure 22 schematically illustrates a two polariser based system for contrast enhancement by ambient light reduction;

Figure 23 schematically illustrates a single polariser based system for contrast enhancement by ambient light reduction;

Figure 24 schematically illustrates a two polariser based system for contrast enhancement by ambient light reduction incorporating a phase modulating layer;

Figure 25 schematically illustrates the transmitted luminance through an additional polariser positioned in front of an LCD panel and rotated through a range of angles;

Figure 26 schematically illustrates an LCD contrast enhancement system;

Figure 27 schematically illustrates an alternative LCD contrast enhancement system;

Figure 28 schematically illustrates the effect of introducing a polariser onto a simple optical flat element;

Figure 29 schematically illustrates a display screen equipped with traditional electromagnetic radiation shielding;

Figure 30 schematically illustrates a display screen having an image guide, the image guide being provided with electrically conductive material disposed in the spaces between the light transmission guides;

Figure 31 schematically illustrates how motion artefacts can result from moving features represented at the boundary between two adjacent panels of a tiled array of display panels;

Figure 32 schematically illustrates an arrangement of tiled displays which reduces the perceived motion artefact described with reference to Figure 31; and

Figure 33 schematically illustrates the degree of angular asymmetry of an image guide and an LCD panel;

Figure 34 schematically illustrates the progressive shift towards yellow of initially white light transmitted through an LCD and an array of light guides;

Figure 35 schematically illustrates the attenuation experienced by light from a backlight as it passes along an optical path through a display.

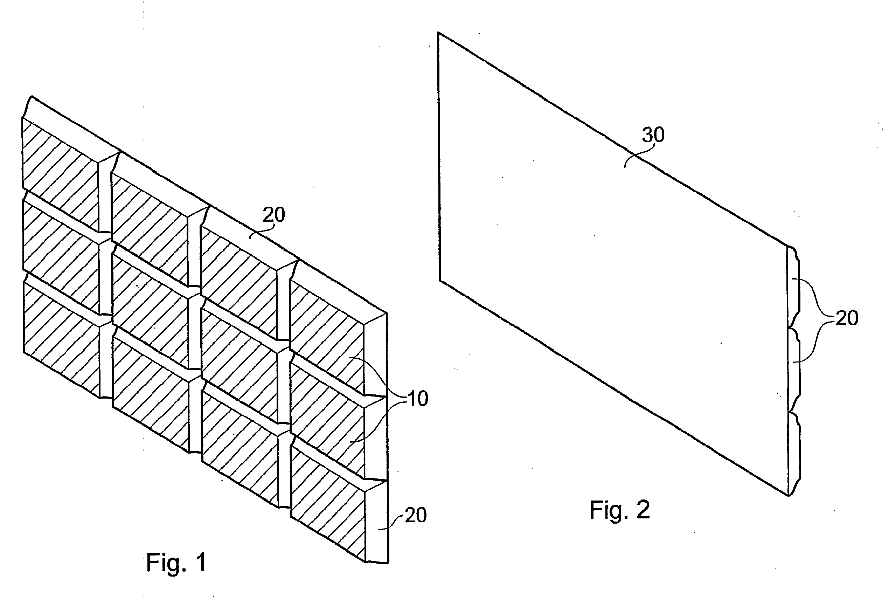

Figure 1 is a schematic isometric rear view of a tiled array of display panels.

The array comprises four display panels in a horizontal direction and three display panels in a vertical direction. Each display panel comprises a light emitting surface 10 and an image guide 20.

The light emitting surfaces 10 are each arranged as a plurality of pixels or picture elements. In practice, they would include, for example, a back light arrangement, focusing, collimating and/or homogenising optics and a liquid crystal panel or the like, but much of this has been omitted for clarity of the diagram.

The light emitting panels each display portions of an overall image to be displayed. The portions represent adjacent tiles in a tessellated arrangement. However, because of the need to run electrical connections and physical support around the edge of the light emitting surfaces 10, they cannot be directly abutted without leaving a dark band or "black matrix" in between. So, the light guides 20 are used to increase the size of the image from each light emitting surface 10 so that the output surfaces of the light guides 20 can be abutted to form a continuous viewing plane.

This arrangement is shown in Figure 2 which is a schematic isometric front view of the array of Figure 1. Here, the output surfaces of the light guides 20 abut so as to form a substantially continuous viewing surface 30.

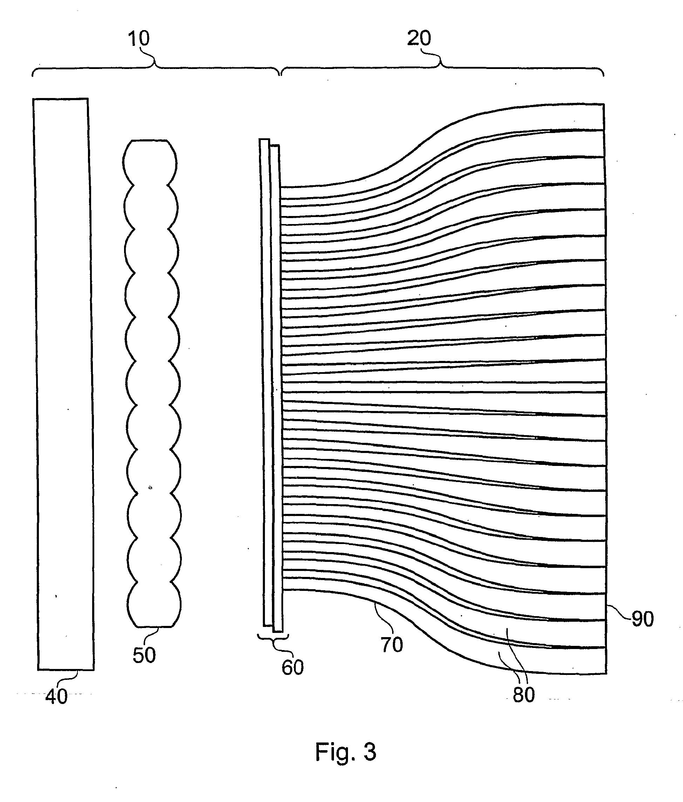

Figure 3 is a schematic side view of a display comprising a light source 40, a collimator/homogeniser 50, a liquid crystal panel 60 and a light guide 70.

The light source 40 and the homogeniser 50 are shown in highly schematic form but in general terms are arranged to provide the back light required by the liquid crystal panel 60.

The liquid crystal panel 60 may be of a type which uses a white or other visible colour back light and provides liquid crystal picture elements to modulate that back light for that display. Alternatively, the liquid crystal panel 60 may be a photo luminescent panel which employs an ultra-violet back light and modulates the ultra-violet light onto an array of phosphors to generate visible light for display. Of course, many other types of light emitting surface 10 may be used such as an organic light emitting diode array.

The image guide 70 comprises an array of light transmission guides 80, each of which carries light from a particular area on the liquid crystal panel 60 to a corresponding particular area on an output surface 90. In doing so, the light transmission guides are arranged to diverge so that the area covered on the output surface 90 is physically larger than the image display area on the liquid crystal panel 60. This, as described above, allows an array of displays as shown in Figure 3 to be abutted without an unsightly black matrix at the viewing plane.

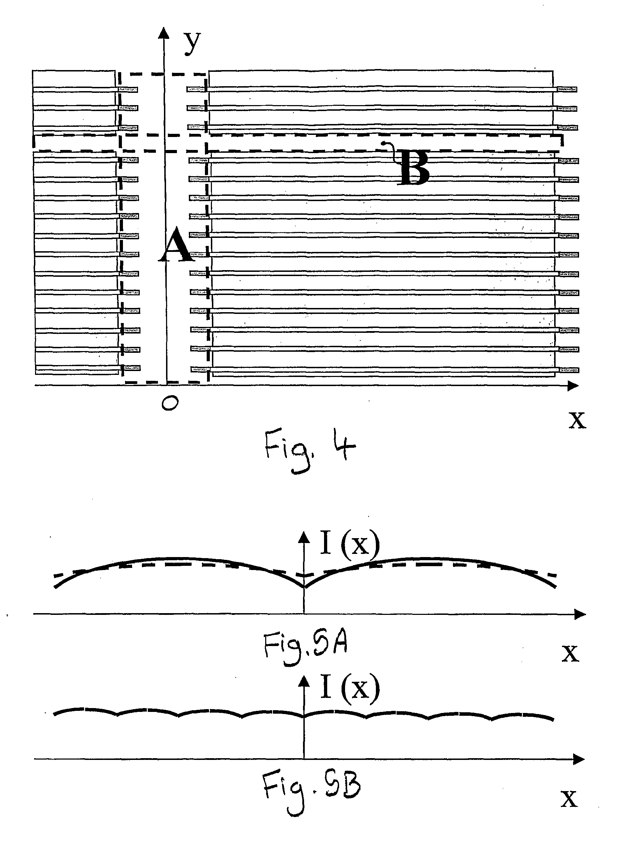

Figure 4 schematically illustrates a plan view of a backlight apparatus (the light source 40) for providing illumination to a modulator plane, such as a LCD panel 60, in a display, the backlight apparatus being disposed substantially parallel to and overlapping the modulator plane. This backlight apparatus comprises a plurality of modules, each module comprising an array of cylindrical light emitting structures 105. In the present case these light emitting structures 105 are fluorescent lamps, for instance they may be External Electrode Fluorescent Lamps (EEFL) or Cold Cathode Fluorescent Lamps (CCFL) or Hot Cathode Fluorescent Lamps (HCFL). Fluorescent lamps such as these comprise light emitting regions 120 and non-emitting regions 110, the non-emitting regions 110 including the structure for supporting the light emitting regions 120 and fixing the fluorescent lamp 105 to a substrate and also including the lamp electrodes by which the lamp 105 is connect to a suitable power supply.

Figure 4 illustrates two areas of the backlight apparatus, the areas A and B, from which no light is emitted. The first area A arises between modules along the y-axis shown. This area is of substantial size due to the presence of two sets of non-emitting regions 110 of the fluorescent lamps 105, one set from each of the two modules. The lamp electrodes of the non-emitting regions 110 of the fluorescent lamps 105 must necessarily be kept separated to ensure no electrical interaction occurs between them. The second area B also arises between modules, this time along the x-axis of the backlight. However, in the case of the second area B, the lack of non-emitting regions 110 means that this area is not sufficiently large so as to substantially affect the homogeneity of light received from the backlight at the modulator plane. Accordingly, the intensity delivered by this backlight to the modulator plane is substantially uniform along the y-axis of Figure 4, but falls off from the centre to the edge of a module along the x-axis.

The luminance profile at the plane of the modulation surface 60 resulting from the backlight described in Figure 4 is shown schematically in Figure 5A by a solid line. The x-axis of Figure 5A defines the position along one axis of a modulator plane parallel to and aligned with the backlight apparatus. A given point on the x-axis of the modulator plane is therefore directly opposite to the same point on the x-axis of the backlight apparatus as shown in Figure 1. The point x=0 in Figure 5A corresponds to an area of the modulator surface directly opposite to the mid-point of the area A of Figure 4 (i.e. half way between the non-emitting regions 110 of two modules). The I(x) axis of Figure 5A is a measure of the intensity of light received at the modulator plane from the backlight apparatus at a given position along its x-axis. It can be seen that the intensity peaks at the centre of each module and dips to a minimum at x=0, halfway between two modules. It can therefore be understood that in order to achieve homogenous intensity across the modulator surface, it is necessary to direct light away from the central region of each module towards the edges of the module. The dashed line in Figure 5A schematically illustrates the effect on modulator illumination of a correction which "flattens" the intensity distribution at the modulator surface by taking light away from the high intensity regions and redistributing it to the lower intensity regions.

Figure 5B schematically illustrates an alternative correction of the intensity distribution of light at the modulator surface in which a smaller (and more local) variation in the intensity is seen across a higher frequency (i.e. not coincident with the module frequency).

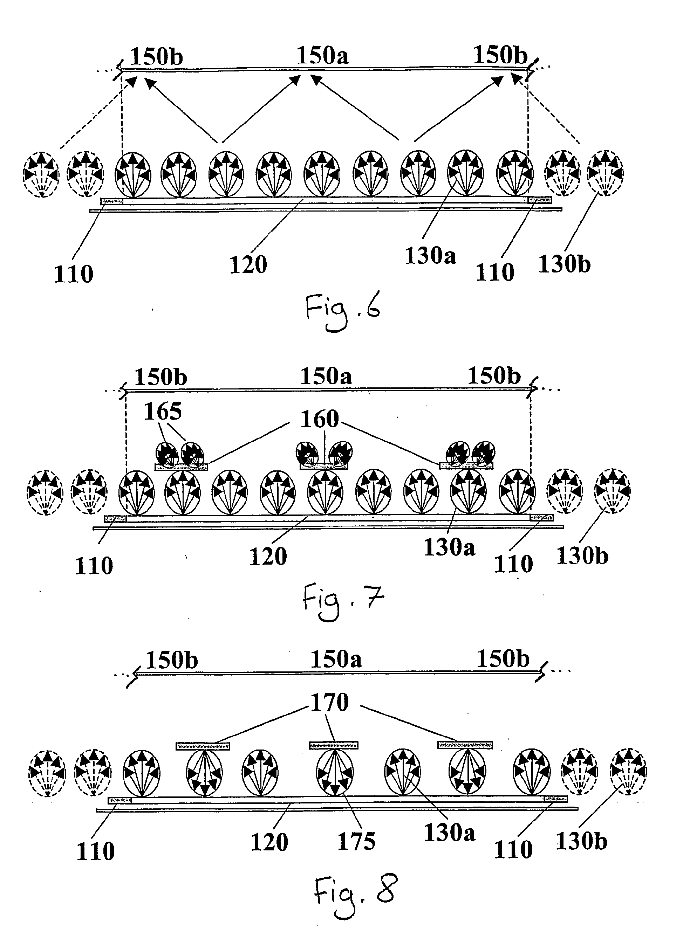

Figure 6 schematically illustrates a side elevation of one of the backlight modules of Figure 4. In Figure 6, a fluorescent lamp 105 is illustrated, and includes non-emitting (electrode) regions 110 at either end of a light emitting extended region 120. Light 130a emitted from the light emitting region 120 illuminates a modulator surface 150a,b. Homogeneous illumination of the modulator surface 150a,b would be provided if the non-emitting regions 110 and the areas along the x-axis between adjacent fluorescent lamps were to emit light 130b. However, because no light 130b is emitted from these areas, as discussed above with reference to Figures 4 and 5, illumination of the modulator surface 150a,b is not uniform. Specifically, an area 150a of the modulator panel receives a greater intensity of light than areas 150b opposite the extremities of the fluorescent lamp.

It is noted that the above discussion applies in particular to the "first hit" illumination of the modulator surface 150a,b, and that additional light will reach the lower flux regions of the modulator surface 150b following reflections within the backlight. However, although in a recycling cavity there will be a redistribution of the light, it will still be the case that the overall luminance will be lower over the areas 150b of the modulator surface unless a system is introduced that preferentially favours these areas and brings the luminance levels closer to parity at all points across the modulator surface 150a,b.

By way of example, assuming that the intensity is uniform across the central 200mm of the tile, and then falls linearly to 0.75 across the outer 50mm at each edge, then the average intensity in the 50mm edge zones will be 0.875 and the average intensity across the entire tile will be approximately 0.96. Therefore around 4% of the flux emitted from the backlight needs to be directed from the central to the outer zones. The direction of the light impinging on the modulator surface 150a,b is relatively unimportant since Brightness Enhancement Films (BEF) (for instance those manufactured by the 3M Company) can be used to redirect light at large off-normal angles back towards the normal, and so this redirection can be carried out by deflecting some of the light towards the outer zones 150b. However, any redirection of light away from the central zone 150a will of course cause a local reduction in flux reaching the modulator array in the central area 150a.

The present arrangement recognises that a short range cyclic variation in intensity introduced into a backlight apparatus can be substantially offset by the action of BEF and Dual BEF (DBEF) films coupled to the modulator surface.

Figure 7 schematically illustrates a backlight module similar to that described with reference to Figure 6. The backlight module of Figure 7 is provided with refractive surfaces 160 at selected points along the emission length of the fluorescent lamp 105. The refractive surfaces 160 are arranged such that light reaching the refractive surfaces from the fluorescent lamp will be locally redirected (along paths 165) towards the darker edge regions of the modulator array 150b. The refractive surfaces 160 may be strips of Fresnel prism or lens material. These will be separated by strips of transparent material or air. The width and refractive power of, and the separation between the refractive surfaces 160 can be varied, depending on the unmodified luminance profile of the backlight, to produce a cyclic variation in intensity, the wavelength and amplitude of which are small enough to produce a visually uniform output from the display device implementing the backlight and modulator. This avoids the "window pane" effect of an uncorrected output from the backlight.

Figure 8 schematically illustrates an alternative backlight. In this arrangement, strips of diffusely reflective material 170 are used instead of (or potentially as an adjunct to) the refractive surfaces 160 of the Figure 7 backlight, to divert light from high to low luminance regions 150b of the modulator surface. Specifically, a portion of the light emitted from the light emitting regions 120 of the fluorescent lamp 105 will strike the reflective surfaces 170 and be redirected back towards the fluorescent lamps and the substrate (along paths 175), where the light will again be reflected towards the modulator surface 150a,b, and in particular towards the low luminance regions 150b.

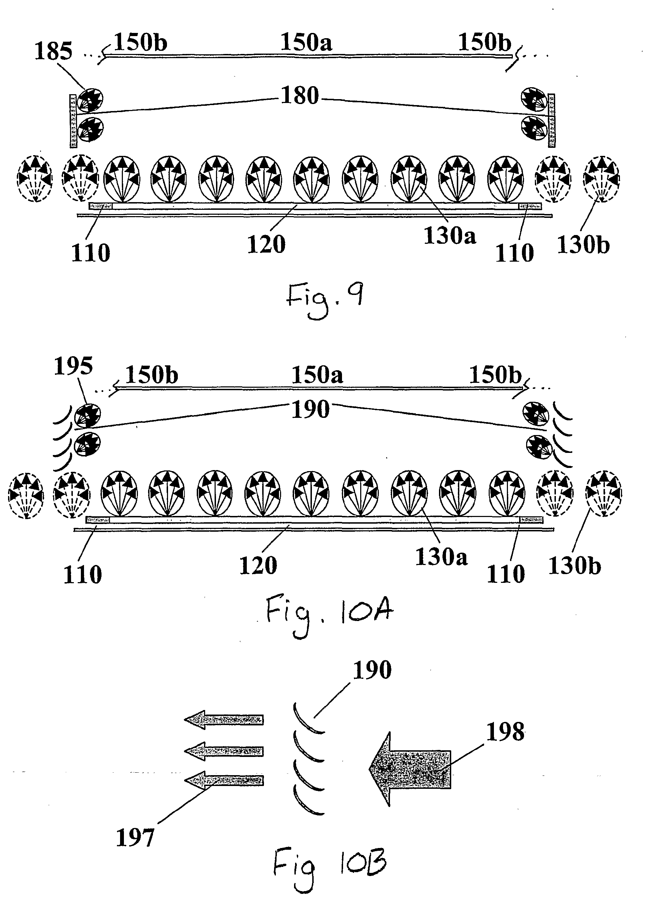

Figure 9 schematically illustrates an alternative backlight. In this arrangement, specularly or diffusely reflecting surfaces 180 are provided on a plane substantially perpendicular to the plane of the backlight in the non-emitting areas of the backlight to redirect preferentially light that would not hit the modulation plane back towards the edge 150b of the plane, the edge 150b otherwise receiving a low level of illumination. These diffusely reflecting surfaces, which may comprise strips of material, reflect light which would usually be directed towards the "dead" space between displays, back towards the active area of the display surface, and in particular towards the regions which would otherwise received a low level of illumination. Note that for a globally air cooled system, where a flow of air is required between the fluorescent lamps and the modulator array, the reflective surfaces 180 cannot be continuous between the backlight substrate and the modulation surface or else airflow will be inhibited.

Figure 10A schematically illustrates a backlight which operates similarly, but which does not impede airflow to the same degree. In this arrangement, specularly or diffusely reflective surfaces 190 are provided on a louvered structure that allows air to flow while reflecting a sizeable fraction of the light from the lamps along paths 195 in a similar way to the Figure 9 arrangement. This structure can be formed of, for instance, expanded metal. This arrangement is well suited to displays in which the space between the backlight and the modulator surface need to be cooled by forced circulation of air or by convection, because the diffuser strips offer less resistance to air flow than the solid structures provided in Figure 9. Figure 10B schematically illustrates an input airflow 197 passing through the diffuser strips 190 to create an airflow 198. It can be seen that although an input airflow 197 may be split and redirected, its passage will be substantially unimpeded.

The various light redirecting structures 160, 170, 180, 190 can be used in various combinations to create an improved pattern of illumination at the modulator surface. The backlight arrangements described all operate on the principle of redirecting light to homogenise illumination of a modulator surface. This is preferable to a backlight apparatus in which homogeneous illumination of a modulator surface is achieved by selectively absorbing light emitted by the fluorescent lamps. For instance, in the example used herein with reference to Figure 6, the luminance of the entire backlight would need to be reduced (through the use of a light absorbing structure) to 75% (the intensity of light at the outer extremity of modulator surface 150b), causing a 25% reduction in display brightness and a similar decrease in power efficiency. In contrast, the reflective techniques used in the described arrangements are substantially lossless and cause only a 4% reduction in peak brightness and no reduction in average brightness (on the basis of the example given).

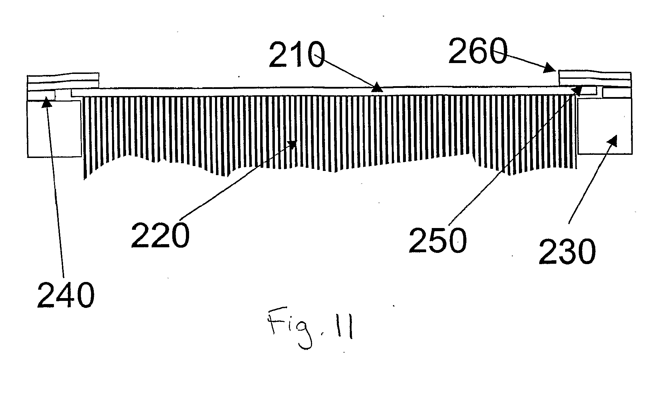

Figure 11 schematically illustrates the attachment of an LCD panel 210 to an image guide 220. It can be seen that the image guide 220 is surrounded by a frame 230, hereinafter referred to as the base frame 230. The base frame 230 is preferably composed of a material having a similar coefficient of thermal expansion to that of the image guide 220. The base frame 230 may be coupled to the image guide 220 by any suitable method, for instance an adhesive. Preferably, as shown in Figure 11, the input face of the image guide 220 protrudes slightly (for example 100 to 500 microns) beyond the input face of the base frame 230 (the face which is parallel to and closest to the input face of the image guide 220).

A first frame 240, which is composed of a material having substantially the same coefficient of thermal expansion to that of the base frame 230, is firmly coupled to the input face of the base frame 230. The first frame 240 may be accurately located with respect to the image guide by a mechanical means such as two dowels inserted into the frame 230. The two dowels may be located into a close fitting circular hole and a close fitting slot in the image guide respectively. The first frame 240 includes an aperture exposing the input face of the image guide and a portion of the base frame 230. The LCD display fits into the aperture provided by the first frame 240, with some free space being provided around the edges of the LCD as leeway for differential expansion between the LCD and the frames. It is also envisaged that the base frame and the first frame could be co-formed as a single structure.

A second frame 260, which is preferably composed of a material having a similar coefficient of thermal expansion to that of the first frame 240, is flexibly coupled to the first frame 240 via a low modulus intermediate layer, for instance a layer of low modulus double-sided adhesive polymer foam tape 250 (such as that manufactured by the 3M Company).

The second frame 260 has a smaller aperture than the first frame 240 and overlaps the edges of the LCD panel 210. The second frame 260 is preferably made of a thin material, for example 50% of the thickness of the LCD panel, and is therefore rigid in the plane parallel to the LCD, but is less rigid than either the LCD or the first frame 240 in a direction perpendicular to the plane of the LCD. Preferably the layer of foam tape covers substantially all of the lower surface of the second frame 260, and flexibly couples the second frame 260 to the LCD panel 210. Accordingly, there is no rigid connection between the LCD and the second frame 260. The apparatus is arranged such that the second frame 260 is distorted away from, and in the direction perpendicular to, the plane of the LCD panel. This distortion results in a force being applied by the second frame 260 against the LCD panel 210 in the direction of the image guide. The force required to distort the second frame 260 is insufficient to cause any significant distortion of the LCD panel 210.

The LCD panel 210 is held in contact with the input face of the image guide 220 as a result of the force applied to the LCD panel by the second frame 260 (the force acting a direction which "pushes" the LCD panel 210 against the image guide 220), and preferably also by means of the protrusion of the image guide 220 beyond the plane of its base frame 230.

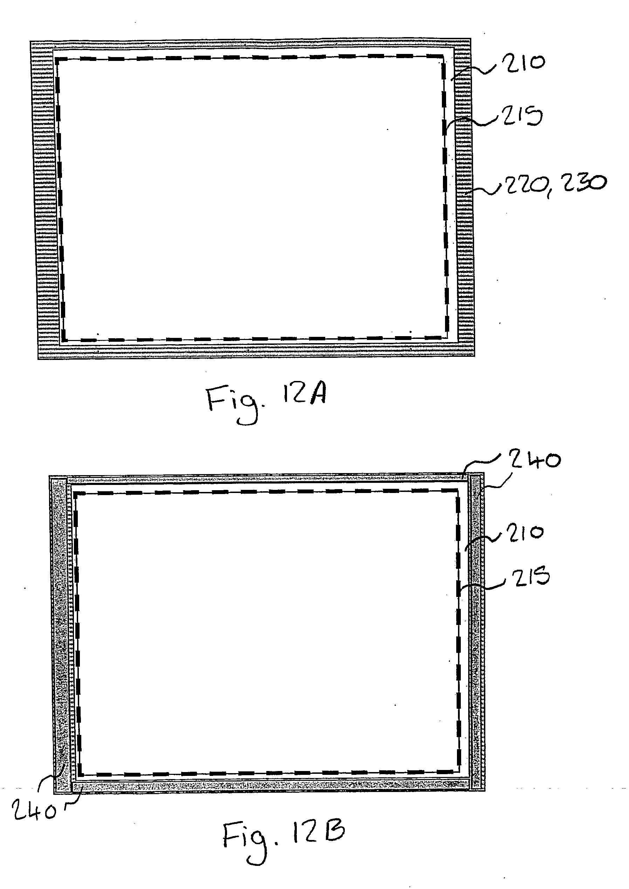

Figures 12A to 12C schematically illustrate the various "layers" of which the apparatus described with reference to Figure 11 is composed.

Figure 12A schematically illustrates the extent of the image guide 220 and its surrounding base frame 230, and an LCD panel 210 placed against the image guide 220 and surrounding base frame 230. The dashed line schematically illustrates the extent of the image area 215 of the LCD panel. In the present example the image area does not cover the full area of the LCD panel, and there is also a noticeable degree of asymmetry in the position of the image area 215, due to the construction of the LCD.

Figure 12B schematically illustrates the positioning of the first frame 240 with respect to the image guide 220, base frame 230 and LCD panel 210. It can be seen that the first frame 240 is positioned against the base frame 230 and surrounds the perimeter of the LCD panel 210, but does not overlap the LCD panel 210.

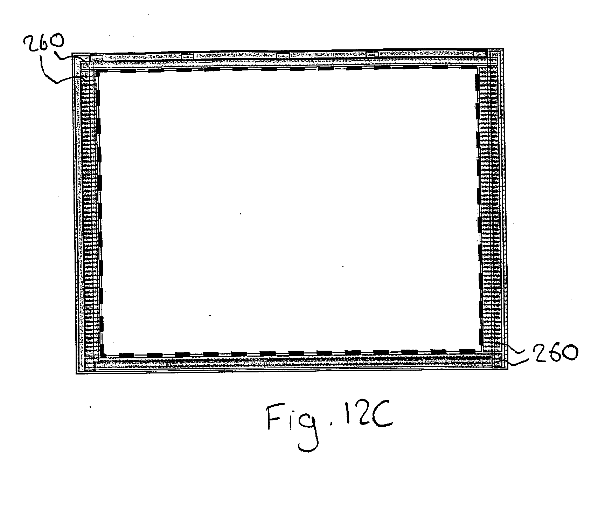

Figure 12C schematically illustrates the positioning of the second frame 260 with respect to the image guide 220, base frame 230, LCD panel 210 and first frame 240. It can be seen that the second frame is positioned against the first frame 240, and also overlaps the perimeter of the LCD panel 210. It is this overlap which serves to retain the LCD panel 210 against the image guide 220. The second frame 260 will not overlap the image area of the LCD panel 210.

In the Figure 12 embodiment, both the first frame 240 and the second frame 260 are composed of four separate strips. The joins between the separate strips in the first frame 240 do not coincide with the joins between the separate strips in the second frame 260. This is so that when the two frames are coupled together by adhesive layer 250, they are joined together as a single unit.

Alternatively, either or both of the first frame 240 and second frame 260 could comprise a continuous frame or even a series of non-adjacent elements positioned at various points (for instance at the corners of the LCD panel) around the perimeter of the LCD panel.

As described above with reference to Figure 11, the first frame 240 and second frame 260 are preferably coupled together with a layer of low modulus double-sided adhesive polymer foam tape 250, the foam tape also flexibly coupling the second frame to the LCD panel. This flexible coupling enables relative movement between the first frame 240, the second frame 260 and the LCD panel 210 under conditions of thermal expansion. Specifically, as the temperature changes, the first frame 240 and the image guide 220 (and its frame 230) expand or contract together by a greater amount than the LCD panel 210 expands or contracts. This differential expansion produces a shear stress in the low modulus polymer foam tape 250 that attaches the first frame 240 to the second frame 260 and the second frame to the LCD panel 210. Because of the low modulus of the tape 250, the shear forces are low, and so little or no distortion of the LCD panel 210 occurs. Because of the disposition of the alignment dowels, differential movement between the LCD and the image guide is symmetrical about the centre point of the LCD, thus minimising the magnitude of any alignment error between the two.

In accordance with the above, it is desirable to maintain the LCD panel 210 in close alignment with, and in close proximity to, an image guide 220 to which it is expansionally mismatched.

An illustrative method by which the LCD panel 210 can be coupled to the image guide 220 is as follows:

(1) The LCD panel 210 is aligned on a base frame 230 of an image guide 220 with respect to reference points at diagonally opposite corners, and is then clamped in place, for instance by the application of a vacuum.
(2) The first frame 240 is aligned to the base frame 230 by means of two dowels, positioned identically to the dowels in the base frame 230.
(3) A backing layer is removed from the exposed side of the foam tape 250 revealing an underlying adhesive, and the second frame 260 is lowered onto the first frame 240, becoming attached together via the adhesive. The adhesive also attaches the second frame 240 to the LCD panel, linking the first frame 240, the second frame 260 and the LCD panel 210 together.
(4) The first frame is attached rigidly to the base frame 230 (and hence the image guide 220) by means of screws.

In the present embodiment the screws pass through the second frame 260 but do not exert a force on it in any direction.

Any suitable alternative method of constructing the LCD panel/image guide coupling can also be used.

Preferably, the base frame 230, the first frame 240 and the foam tape 250 are opaque. The second frame 260 may be opaque, and should ideally be diffusely reflective (e.g. white) on the side not attached to the foam tape 250. These preferred features reduce the risk of light leakage around the frame and improve the efficiency of the backlight system by redirecting light incident on to the frame back into the backlight cavity.

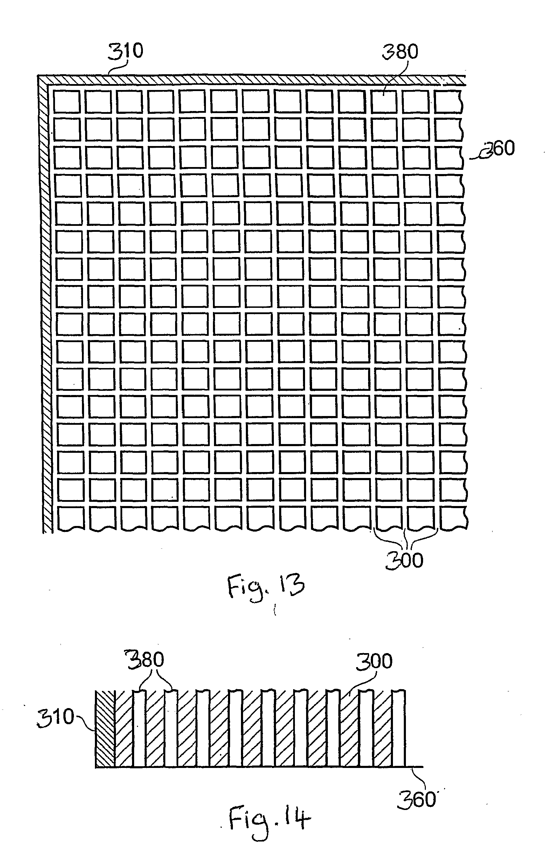

Referring to Figures 13 and 14, which schematically illustrate plan and side views of an array of light transmission guides respectively, each light transmission guide 380 overlies a respective pixel element, although other arrangements such as multiple pixel elements per light transmission guide 380, or multiple light transmission guides 380 per pixel element, are of course possible. The light transmission guides 380 are separated by gaps 300 which are preferably filled with a low refractive index adhesive. It can be seen that the array of light transmission guides 380, which together make up an image guide, are surrounded by a frame 310 which may be coupled to the array of light transmission guides 380 by any suitable method, for instance an adhesive.

In normal operation, a certain amount of light may propagate from one light transmission guide 380 to an adjacent light transmission guide. This may be due in particular to either or both of the following behaviours: Firstly, some light may propagate at large angles with respect to the walls of the light transmission guides, and in particular exceeding the critical angle for total internal reflection at the interface between a light transmission guide 380 and the adhesive filling the gaps 300 and being transmitted into an adjacent fibre. Secondly, some light may be incident on a fibre adjacent to the one intended because of a finite gap which may exist between the input ends of the light transmission guides 380 and the image output surface 360. Such behaviour is undesirable, but is difficult to control.

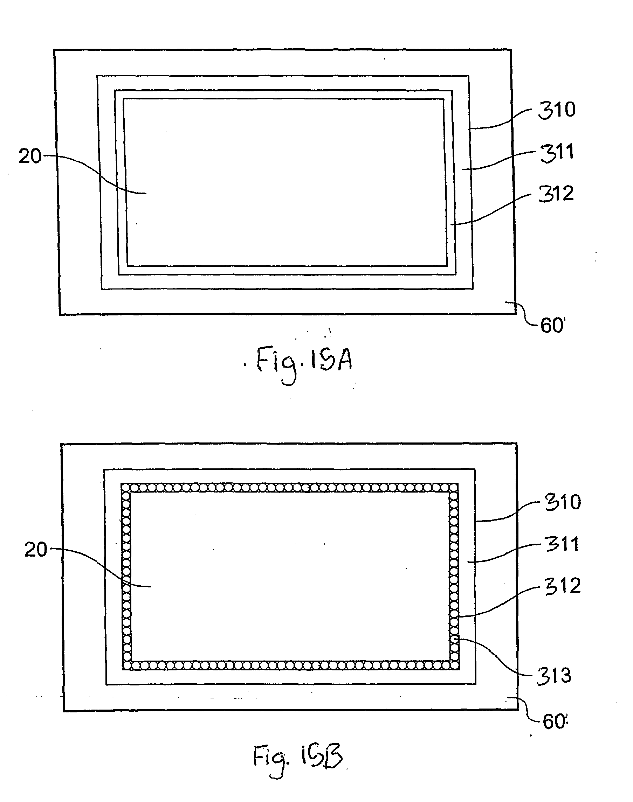

In order that luminance variations between central and peripheral regions of the image guide are reduced, the means by which the frame 310 is attached to the outermost light transmission guides of the image guide 20 will aim to conserve the optical characteristics that exist between non-peripheral fibres in the array. Example arrangements which seek to address this issue are illustrated in Figures 15A and 15B. The frame 310 comprises both an outer frame 311, and an inner frame 312 of a material having substantially similar optical characteristics to the light transmission guides and being coupled to the peripheral light transmission guides (i.e. those adjacent to the frame) in a manner that is optically substantially identical to the manner in which the light transmission guides 380 are attached to each other is provided. The inner frame 312 is sandwiched between the outer row of light transmission guides 380 and the outer frame 311 (which lends rigidity to the structure). The inner frame 312 could for instance take the form of a continuous boundary of material surrounding all sides of the array or could comprise an additional boundary of light transmission guides 313 around the array. The additional boundary of light transmission guides 380 could have a thickness of a single light transmission guide 380, or alternatively could have a thickness of two or more light transmission guides 380, arranged into rows of light transmission guides 380 along each edge of the inner frame 312. In the former case, the continuous boundary of material will not extend to the plane of the output ends of the light transmission guides. In the latter case, the additional light transmission guides 313 would be truncated so as not to reach the plane of the output ends of the light transmission guides 380. The outer frame 311 may have the same or similar or different optical characteristics to the light transmission guides 380. Preferred arrangements of the outer frame 311 may be operable to support the array of light transmission guides 380, prevent misregistration of the light transmission guides with respect to underlying pixel elements of a display device 60, and to join arrays of light transmission guides 380 together into a tiled arrangement.

Light entering into the inner frame 312 should be prevented or at least inhibited from exiting the inner frame 312 in a manner that would degrade the visual properties of the display.

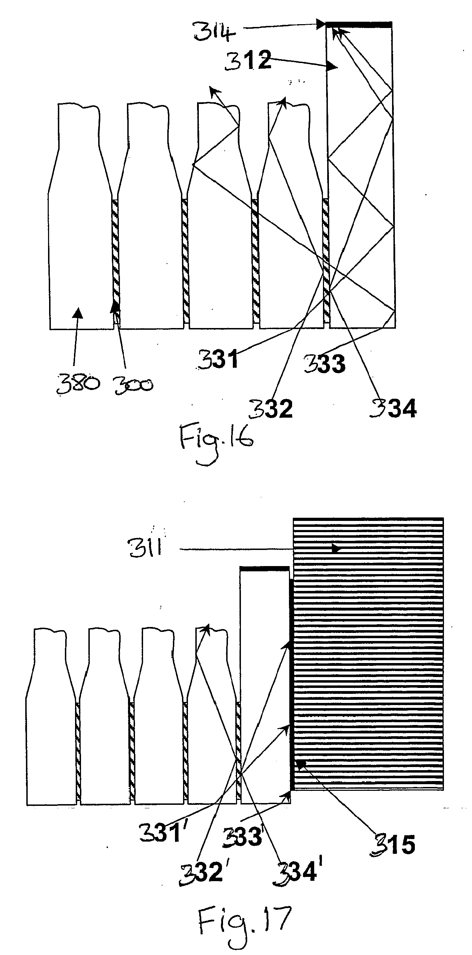

Figure 16 schematically illustrates a mechanism for preventing or inhibiting the exiting of light from the inner frame. Where the inner frame 312 comprises truncated light transmission guides, these have their truncated ends covered (e.g. coated) with a light absorbing layer 314, and where the inner frame 312 comprises a continuous boundary of material, the edge farthest from the input face of the light transmission guides 380 is covered (e.g. coated) with a light absorbing layer 314. The light absorbing layer 314 in either case substantially prevents the propagation of light beyond the end of the inner frame.

The optical paths taken by light entering the inner frame 312 in the absence of an outer frame 311 are shown in Figure 16 by schematic rays 331, 332, 333 and 334. Ray 331 enters the inner frame 312 through the coupling between the inner frame 312 and an adjacent light transmission guide 380. Schematic ray 331 is internally reflected by the inner frame 312 and eventually absorbed by the light absorbing layer 314.

Ray 332, which strikes the input surface of the image guide at a smaller angle than line 331, does not enter the inner frame 312.

Ray 333, which enters the inner frame 312 through the input end of the inner frame 312, is internally reflected and exits the inner frame 312 through the coupling between the inner frame 312 and an adjacent light transmission guide 380, pass into the adjacent light transmission guide 380, and to pass into another light transmission guide 380.

Ray 334, which also enters the inner frame 312 through the input end of the inner frame 312, and is internally reflected by the inner frame 312 and eventually absorbed by the light absorbing layer 314.

Figure 17 schematically illustrates the operation of the mechanism of Figure 16 when fixed into an outer frame 311. The optical paths taken by light entering the inner frame 312 when the inner frame 312 is coupled into an outer frame 311 are shown in Figure 17 by schematic rays 331', 332', 333' and 334'.

It can be seen that schematic rays 331', 333' and 334', all of which impinge on a portion of the inner frame 312 in contact with the outer frame 311, are absorbed upon contact with the interface between the inner frame 312 and the outer frame 311. Ray 332', which does not impinge on this interface, is unaffected by the presence of the outer frame 311.

As described above, the outer frame 311 is made of a structurally strong material, which for reasons of system optical performance is preferably optically absorbing. The preferred method of attaching the inner frame 312 and the outer frame 311 together is by means of a layer of adhesive 315. However, as can be seen from Figure 17, less light is propagated by the inner frame 312 when it is attached to the outer frame 311.

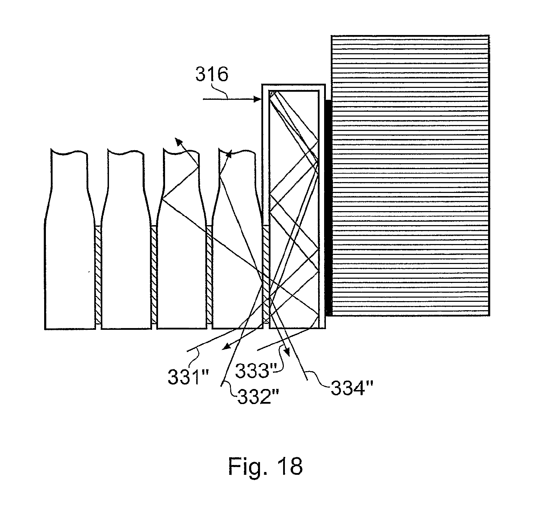

Figure 18 schematically illustrates an alternative arrangement which seeks to overcome these disadvantages. A comparison of Figures 17 and 18 shows that the light blocking layer 314 has been removed and replaced with a reflective layer 316. The reflective layer covers substantially all of the surfaces of the inner frame 312 other than the input surface and the portion of the inner frame 312 in contact with the adhesive layers coupling the inner frame 312 to adjacent light transmission guides 380. The improvement in optical performance can be seen in schematic rays 333", which now follows the same path as in Figure 16 and in schematic rays 331" and 334" which are reflected several times and re-emerge from the entrance face of the inner frame 312 or adjacent light transmission guides 380, possibly to be recycled, improving the luminous efficiency of the system.

Another advantage of this arrangement is that it enables the properties of the outer frame 311 and the adhesive used to attach it to the inner frame 312, are made completely independent of the optical properties of the device.

The reflective layer 316 can either be deposited as a metal layer onto the inner frame 312, or could be applied in the form of a metallic adhesive tape.

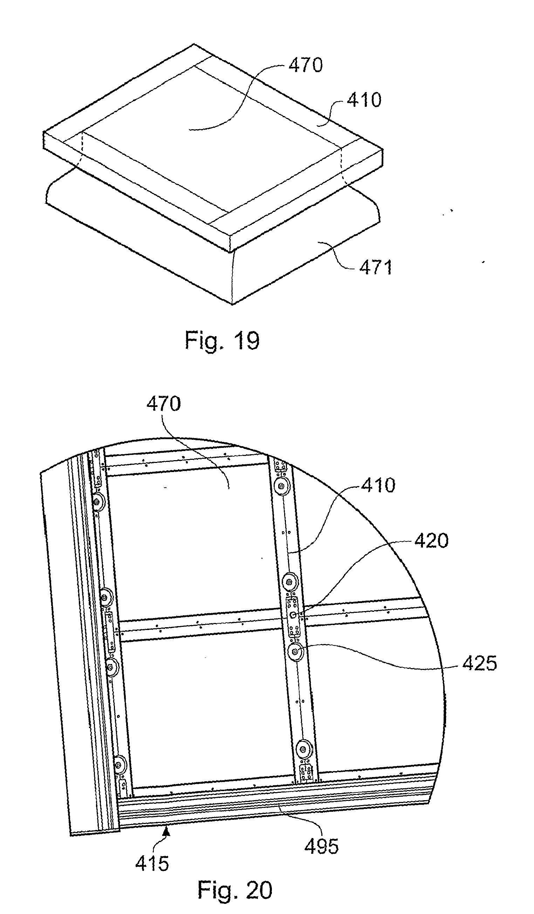

Figure 19 schematically illustrates a single image guide 470 having a surrounding base frame 410. Each image guide 470 within the tiled array is glued into a rectangular supporting frame 410, machined or moulded from a suitable material (such as a polymer) selected for rigidity, strength, low friction and a coefficient of thermal expansion matched to that of the image guide 470.

The nominal outer dimensions of the base frame 410 are preferably substantially identical to the dimensions of the output end 471 (front face) of the image guide 470. As the coefficient of thermal expansion of these parts is substantially similar, the outer dimensions of the base frame 410 and front display face remain nominally identical over the working temperature range of the display.

Each individual image guide 470 is glued into its respective base frame 410 by means of a specially constructed jig, to ensure accurate alignment of the base frame 410 to the image guide 470, by means of which individual image guides 470 may be accurately assembled prior to final assembly of the complete tiled display.

Figure 20 schematically illustrates a tiled array of image guides held together by a supporting structural frame, In the tiled arrangement, the individual image guides are tiled into a rectangular array, with adjacent modules being held together by, for instance, short flat strips 420, although other methods of joining together adjacent modules could also be used. The strips 420 may optionally be constructed from metal because the dimensional variation between the strips 420 and the corresponding mounting points on the base frames 410 is small over the distances involved, and the stresses imposed due to differential thermal expansion over this small region are therefore not significant.

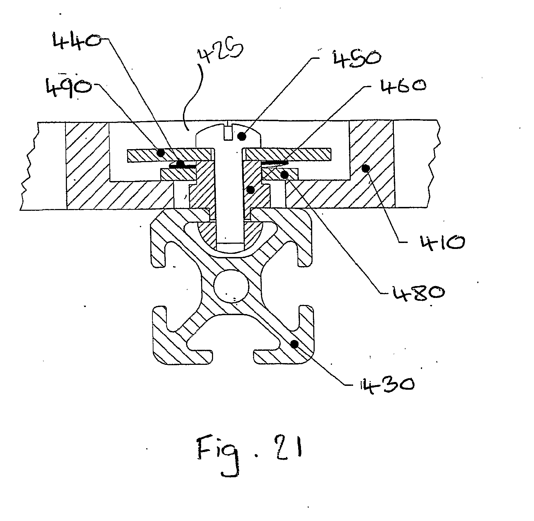

The base frames 410 provide rigidity and maintain alignment of the light transmission guides 380 in a plane parallel to the front face of the display. The array of base frames 410 is reinforced by a supporting frame 415 (which may be metallic or composed of reinforced plastic) to prevent relative movement perpendicular to the front viewing surface. The supporting frame 415 comprises both horizontal struts 495, as shown in Figure 20 and also vertical struts 430, as shown in Figure 21 (described below).

Figure 21 schematically illustrates a cutaway view of the intersection between the base frames 410 of two image guides 470. The vertical struts 430 of the supporting frame are preferably positioned in the gaps between the base frames 410 and the two adjacent image guides 470, although the vertical struts 430 could alternatively be completely or partially recessed into the base frame 410.

The supporting frame 415 could for example be constructed from extruded aluminium sections for low cost, light weight and modularity.

The base frames 410 are preferably attached to the supporting frame 415 using the structure illustrated in Figure 21. The base frame 410 is spring loaded onto the vertical supporting strut 430, for instance by means of a crinkle-washer 440 (or other spring loaded device) held between two large diameter washers 480, 490. A screw fastener 450 is fully tightened onto a hollow spacer 460, deflecting the crinkle washer by a predetermined amount. The resulting force on the base frame 410 is sufficient to maintain it in contact with the metal structural frame 415, while permitting lateral movement as the polymer expands or contracts relative to the supporting frame 415 due to temperature variations. A large clearance hole 425 is provided in the base frame 410 to provide space for the relative movement in the plane parallel to the front viewing area.

The low friction properties of the base frame 410 ensure a low level of stress on the polymer parts of the system as the screen expands and contracts relative to its supporting frame 415.

As the temperature changes, the array of image guides with their base frames 410 expand and contract together by a greater amount than the supporting frame 415 expands and contracts.

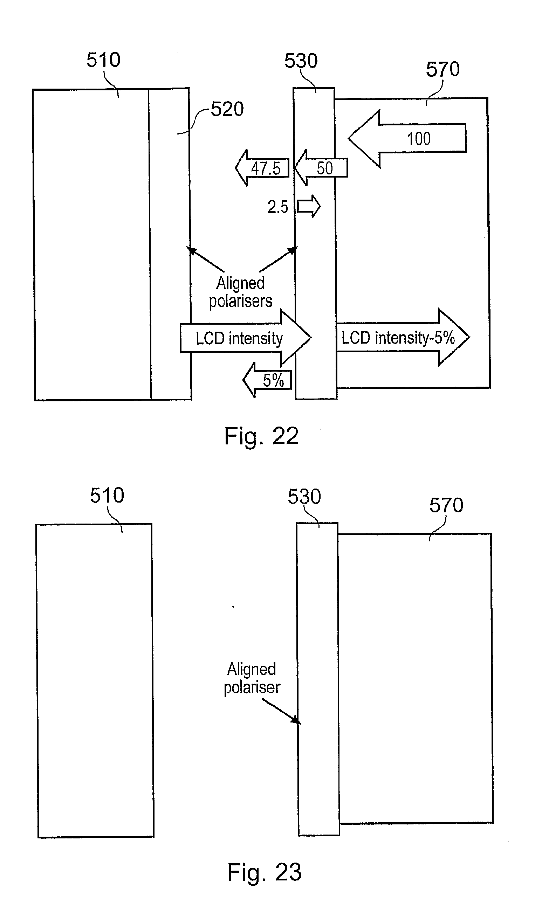

Figure 22 schematically illustrates a contrast enhancement system. In an LCD based display, the amount of light exiting from an LCD 510 is controlled by polarisation modulation. This means that the output light (for all grey levels) will have the same defined polarisation. Ambient light, on the other hand, will be unpolarised. Rather than coupling the ambient light travelling towards the LCD 510 from the image guide 570 input to the LCD output polariser 520, a polariser 530 is bonded directly to the image guide 570 input array. As a result of this, the ambient light is directly coupled to the polariser 530 and approximately half of it is absorbed. The majority of the remaining ambient light will exit the polariser 530 and the polariser 520, strike the LCD 510 and be absorbed (when the image on the LCD is black) or transmitted through to the backlight (when the image on the LCD is white).

Referring to Figure 22, which shows the situation for ideally linearly polarised light exiting the LCD polarisation modulator 510, 520 and being incident on an aligned ideal linear polariser 530 and being 95% transmitted (5% is reflected due to Fresnel reflection.).

The undesirable ambient light arriving from the other direction passes through the same polariser 530 in the opposite direction. Due to its unpolarised state, approximately half of this ambient light is absorbed by the polariser 530. Of the remaining half, approximately 47.5% will be transmitted and approximately 2.5% will be reflected at the polariser-air interface and will contribute to the ambient backscattered light seen by the viewer.

In reality the polariser 530 will not transmit 50% of the ambient light and nor will it transmit 95% of the light from the LCD 510. The transmission will follow the standard equation for the transmission of a non-ideal polariser, which is:

$$T = K1 \cos^2 \theta + K2 \sin^2 \theta \qquad\qquad Eq.1$$

Where,

K1 is the transmission of light linearly polarised parallel to the transmission axis of the polariser,

K2 is the transmission of light linearly polarised perpendicular to the transmission axis of the polariser,

$\theta$ is the angle between the polarisation axis of the incident light and the transmission axis of the polariser,

and T is the intensity transmittance coefficient. Real examples of K1 and K2 are given (at 550 nm) as 0.74 and 4 x $10^{-5}$ respectively for the commercially available HN-38 Polaroid (RTM) polariser. Note that in the nomenclature used by Polaroid the H denotes a polariser made with iodine fixed in stretched polyvinyl alcohol, the N denotes a neutral colour to the layer and the number 38 denotes the approximate value of the intensity transmittance in percent of a single such polariser of that type to unpolarised white light. Other polarisers with a higher transmittance are also available.

Figure 23 schematically illustrates a similar, but simpler, arrangement in which no polariser is provided on the LCD 510 output face, and in which the polariser 530 located at the input of the image guide 570 is aligned to the transmission polarisation of the LCD device 510. This polariser 530 will have the same effect in terms of the polarisation modulated LCD but, being bonded to the image guide 570, will couple the ambient light to the polariser as before (rather than reflecting it back to the viewer). This arrangement has the added advantage of increasing the throughput while maintaining the same absorption of ambient light. In this case, the polariser 530 replaces the exit polariser of the LCD. The advantage of placing the polariser on the input surface of the image guide is that, as before, ambient light is coupled into the polariser more efficiently (because of the index matching improvement of the adhesive compared to air) than if the polariser was attached to the LCD. With regard to the LCD performance, this is substantially the same in either case, with 2 solid/air interfaces in the light path whether the polariser is attached to the LCD or the image guide 570.

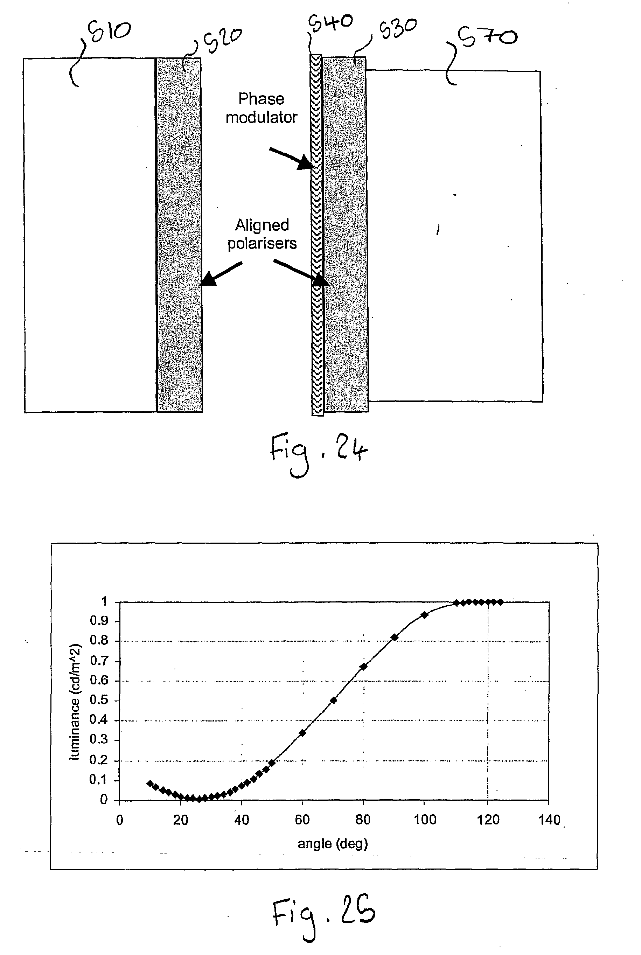

Figure 24 schematically illustrates an arrangement similar to that of Figure 22, but where a phase modulation layer 540 is coupled to the image guide polariser 530. Even using the above polariser arrangements, a fraction of the unabsorbed light will be reflected at the polariser-air interface at the input end of the image guide 570 back through the polariser 530 and into the image guide 570. This will be delivered to the viewer and adversely affect the contrast. If the degree of ambient light being transmitted to the viewer in this way is unacceptably high, then an additional component can be added in the form of the phase modulation layer 540. The phase modulation layer 540 is arranged such that the (now) polarised light that has been transmitted through the image guide input polariser 530 and the LCD polarising layer 520 and reflected back towards the image guide input polariser has had its polarisation converted to an elliptical polarisation and is therefore partially absorbed while traversing the image guide input polariser 530 for a second time. The phase modulation will occur in both directions of travel through the phase modulation layer 540 for the reflected light but light from the LCD polarisation modulation layer will traverse the phase modulation layer 540 only once. The phase modulation layer is chosen to reduce the alteration of the polarisation of the LCD light (thereby minimising its absorption), the reduction being balanced against a corresponding increase in the absorption of the reflected light.

In the most extreme case the phase modulation layer 540 rotates the polarisation of linearly polarised light through 45 degrees for each pass through the layer. This would mean that the ambient light reflected at the polariser-air interface would be rotated through 90° (two passes) and substantially all of it would be absorbed by the image guide input polariser 530. The light from the LCD on the other hand would only be rotated through 45° and half of it would be absorbed by the image guide input polariser 530. Due to the severity of this penalty in terms of brightness loss, a smaller phase retardation could be used to convert linearly polarised light into slightly elliptically polarised light after each pass through the phase modulation layer 540 thereby ensuring that a smaller fraction of the LCD light is absorbed along with a larger fraction of the ambient light reflected at the interface (due to passing through the retarder twice). It is therefore necessary to balance the brightness and efficiency of the display device with the need for high contrast.

The polariser alignment has low tolerance requirements as can be deduced from equation (1). The dominant term in equation (1) is the $K1 \cos^2 \theta$ term. For a mis-alignment of 6 degrees the term becomes $\sim 0.989$ K1.

Figure 25 schematically illustrates a plot of normalised measured values for the transmission through a third polariser placed in front of a 15 inch display panel and rotated through a range of angles. The plot shows the degree of transmission through the third polariser as a function of the angle of rotation. The orientation was randomly chosen at first and then rotated in steps through a range of angles greater than 90 degrees.

An alternative, more complex, arrangement is possible which requires more than one retardation layer. In order to improve on the transmission of the LCD light from the previous two arrangements, a second phase modulation layer is introduced at the LCD output to counteract the effects of the image guide input phase modulation layer 540. That is, one phase modulation layer at the LCD output converts the light to Right Hand elliptically (or circularly) polarised light. This is then converted back to linearly polarised light on passing through the second phase modulation layer 540, which is optically coupled to the image guide input polariser 530, and then transmitted. The ambient light that has been transmitted through the image guide polariser 530 is converted to Right Hand elliptically polarised light on passing through the image guide phase modulation layer 540. However, any light returned through the phase modulation layer 540 upon reflection at the phase modulation layer-air interface does so as Left Hand elliptically polarised light and so is converted to the orthogonal linear polarisation state. This arrangement operates in a similar manner to the previous example but eliminates most of the transmission loss of light from the LCD. For instance, supposing that the phase modulation layer on the LCD provides quarter wave circular/elliptical polarisation, then circularly polarised light will be transmitted towards the phase modulation layer on the image guide. If this light is oriented at 90° with respect to the phase modulation layer on the LCD, but is otherwise identical, the circularly polarised light will be converted back to linear and will be substantially 100% transmitted by the polariser on the image guide. Ambient light will be transmitted as circularly polarised light in the gap between the image guide and the LCD and will change its handedness (for instance from Left Hand to Right Hand) on reflection from the phase modulation layer/air interface at the LCD. On passing through the image guide phase modulation layer, the light will be restored to a linearly polarised state rotated 90° from its initial state and will therefore be blocked by the polariser.

In general, any combination of polarisers and phase modulation layers (including cholesteric polarisers) at these locations within the image guide system may produce favourable results.

In addition to the above arrangements, it is also possible to include an anti-reflection (AR) coating in the system to increase the throughput from the LCD modulation layer and to reduce the reflected fraction of the ambient light at the interface between the new image guide input component and air.

It can therefore be seen that a means by which ambient light can be suppressed by using an additional polariser coupled to the image guide input face is provided. The ambient light that is guided to this plane will undergo losses due to its unpolarised nature and the transmission characteristics of the polariser.

These principles are not limited to use with an image guide based display, but also have general application, for instance to a display comprising a simple glass or plastic sheet (with an AR coating), such as those used for touch (e.g. a touch panel) or acoustic applications (for example a transparent sheet used as a loudspeaker device), rather than or in addition to an image guide. The concept is not limited merely to improving the contrast of a tiled LC display.

For instance, applying these concepts to a single high contrast LCD system, the arrangements described above are equally applicable, and other configurations are also possible.

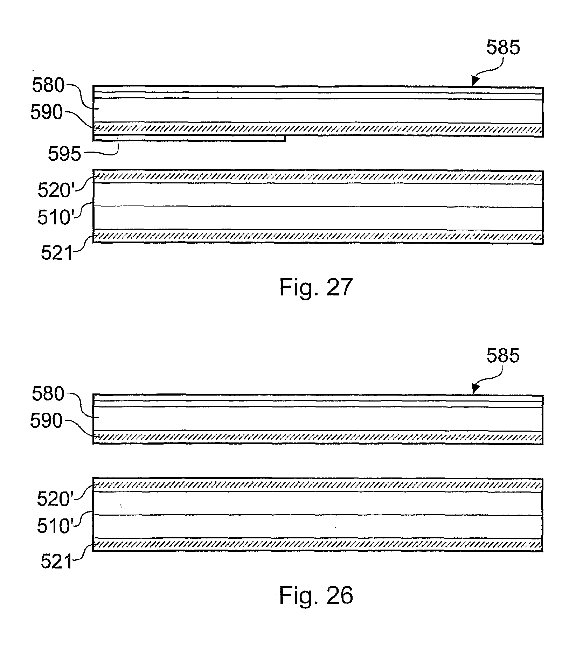

Figure 26 schematically illustrates a contrast enhancement arrangement provided on a single high contrast LCD system. A glass sheet 580 with an anti reflection (AR) coating is provided with a polariser 590 on the reverse side, the polariser side of the glass sheet 580 facing an LCD layer 510' having polarisers 520', 521 at both its input and output faces. By providing the polariser 590 on the side of the AR coated glass 580 facing the LCD 510' serves to couple received ambient light to the polariser 590.

Figure 27 schematically illustrates another contrast enhancement arrangement provided on a single high contrast LCD system. This arrangement is similar to that of Figure 26, in that an AR coated glass sheet 580 is provided with a polariser 590 on the reverse side as before, but additionally the polariser 590 on the reverse side of the AR coated glass sheet is provided with an AR coating 595 so that a very small percentage of the ambient light that has passed through the polariser 590 is reflected back from the polariser-air interface towards the viewer.

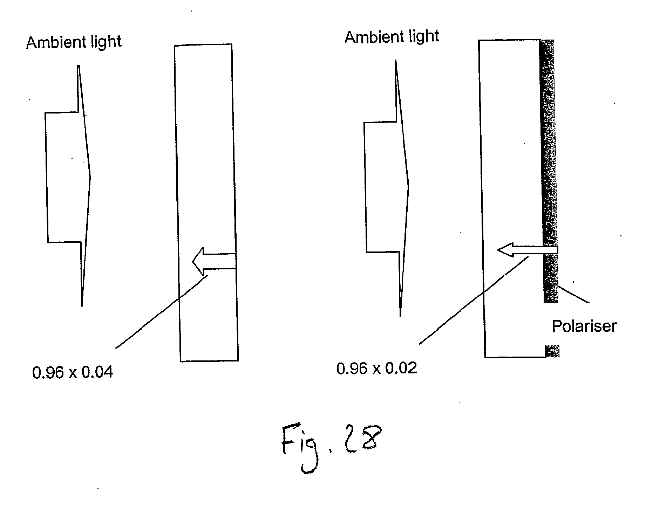

Figure 28 schematically compares the general principle of the above arrangements with the use of a neutral density film for reducing ambient reflection from the input face of an image guide (or protective window in front of a standard LCD). Figure 28 shows how the introduction of a polariser onto a simple optical flat element reduces the ambient Fresnel reflection from the back surface by approximately half from 0.04 to 0.02. These values include the Fresnel reflections at the front surface when ambient light is incident on the image guide output.

In order to replace the polariser with a neutral density filter that achieves the same reduction in the level of ambient light reflected back to the viewer, two passes through the filter must be equivalent to half of the amount of light reflected from a the back face of the optical flat being absorbed. This can be expressed as

$$(e^{-\alpha x})^2 = 0.5$$

where $\alpha$ is the optical density coefficient (per unit path length), and
x is the path length through the neutral density filter.

Given that this fractional transmission is for two passes through the filter, it follows that the single pass absorption of the neutral density filter must be approximately $(0.5)^{0.5} = 0.7071$.

When the light departing from the modulator (to the viewer) is considered, the advantages of the proposed system are seen. Specifically, the polariser receives light polarised parallel to its transmission axis and so transmits more than 96 % (ignoring here the Fresnel reflections common to both cases) whereas the neutral density filter transmits less than 71 % of the light. The neutral density filter situation gets worse if the negative impact on the achievable contrast resulting from this reduction in the image brightness in turn demands even more absorption from the filter.

An inexpensive method of reducing the fraction of reflected, ambient light without the need for anti-reflection coatings at the image guide input or the LCD output while maintaining a high transmission from the backlight is therefore provided. The benefits include an improvement in the contrast using a relatively thin and cheap component that allows the image guide array to be placed close to the LCD (or any other polarisation modulator) modulation array.

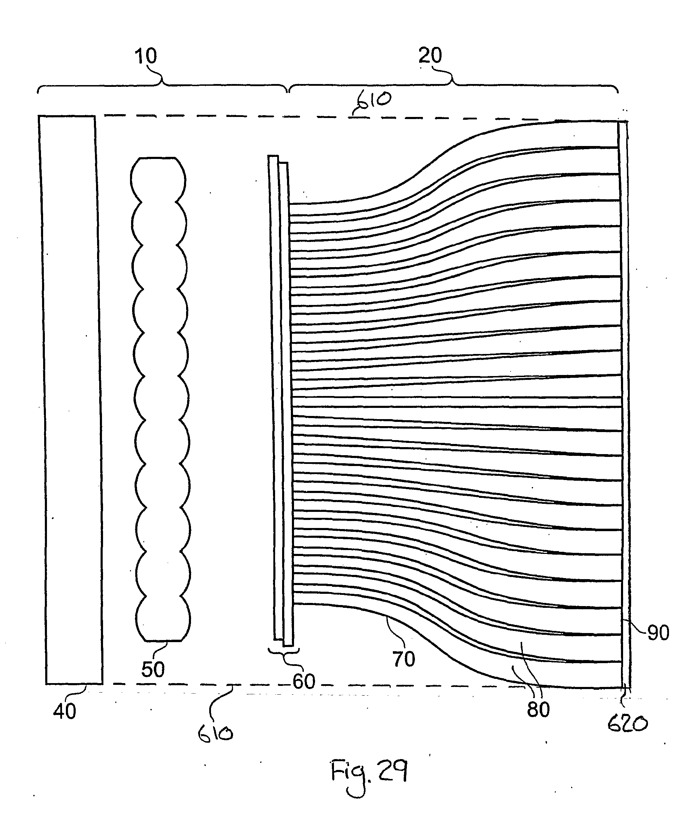

Figure 29 schematically illustrates a display screen comprising an image guide 20 and having a traditional transparent electrically conducting layer 620 covering the viewing surface 90, and an electrically conducting shield 610 forming an enclosure around the screen electronics. Electromagnetic radiation emitted from the screen electronics (for instance the drive electronics for an LCD modulator 60) is inhibited from leaving the vicinity of the display by the presence of the electrically conducting shield 610 provided around the display device, and the transparent electrically conducting layer 620 attached to the front of the display and bonded to the electrically conducting shield 610.

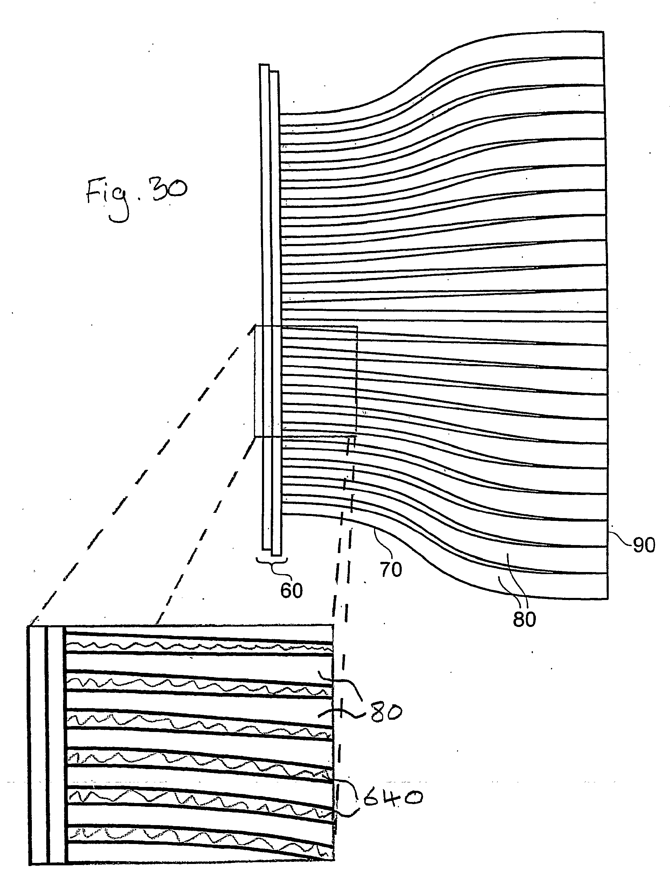

Figure 30 schematically illustrates an advantageous shielding arrangement applicable to displays having image guides 20 provided between the display panel or modulator 60 and the image output surface 90. An electrically conducting material is provided in the spaces between the light transmission guides 80 making up the image guide 20 to intercept electromagnetic radiation propagating through the image guide 20 towards the image output surface 90. One possible implementation uses carbon loaded plastic strips, which also act to reduce light leakage and cross talk between light transmission guides 80 in the image guide 20. Alternatively, thin metal wire or some other electrically conductive layer applied between the light transmission guides 80, but substantially out of optical contact with them, could be used.

Such an arrangement advantageously provides superior optical performance over a similar display having an electrically conductive layer covering its viewing surface. This is because the electrically conductive layer may absorb a proportion of the light intended to exit the display, whereas the strips of material 640 provided between the light transmission guides 80 will not absorb light intended to exit the display, but will only absorb undesirable light (cross-talk between light transmission guides 80).

The use of an electrically conducting transparent layer provided over the viewing area of the display tends to result in optical artefacts arising at the joins between conducting layers in a tiled display (where the conducting layer is applied to the outside of the screen). A shielding arrangement which does not use a transparent conducting layer over the viewing surface of the screen will not produce these optical artefacts. Further, the present arrangement provides better coupling of the modulator 60 to the image guide input than would be the case for a display having a conducting layer applied to surface of the output face of the modulator 60). The present arrangement may also provide substantial savings in cost.

As can be seen from the cut-away section of Figure 30, carbon-loaded polymer strips 640 may be placed between the rows or columns (or both) of light guides during the manufacturing process, primarily to improve the optical performance, as discussed above. If the polymer strips 640 are bonded together and to the outer framework of the display, the active elements in the front of the display will be shielded, substantially reducing radiated electromagnetic emissions. The electrical conductivity of the black polymer strips 640 is quite low, so to improve the electrical performance of the described arrangement, fine high conductivity wires could be used (e.g. made of copper, aluminium or silver and for example 0.25-0.1 mm in diameter), either on their own (preferably woven into a mesh) or electrically bonded to the conductive polymer strips 640.

A problem may arise with a tiled array of display panels where each panel in the array (for example, an LCD panel) is driven using a progressive scan addressing scheme. If such an addressing scheme is used, then during a single frame the whole picture on the panel is refreshed not at the same time, but starting at the top row of the panel at the beginning of the frame, and ending at the bottom row at the end of the frame. The convention is usually to start the refresh at the top of the display, and work down. This means that in a tiled array of panels, at the beginning of a frame, the top line of one panel is refreshed, but the bottom line of the panel directly above it still retains the image from the previous frame. This remains the case until the end of the frame, when the bottom line is finally refreshed. However, almost immediately after this, the top line of the panel below will be refreshed with the next frame information, so again there will be a single frame discrepancy between the top of one panel and the (adjacent) bottom line of the panel directly above it. This is not in itself a problem for static images, where the information on successive frames is substantially the same, but for moving images, and particularly for fast moving images where successive frames are substantially different, the result is seen as an apparent breaking up of the moving image. This phenomenon is an undesirable motion artefact.

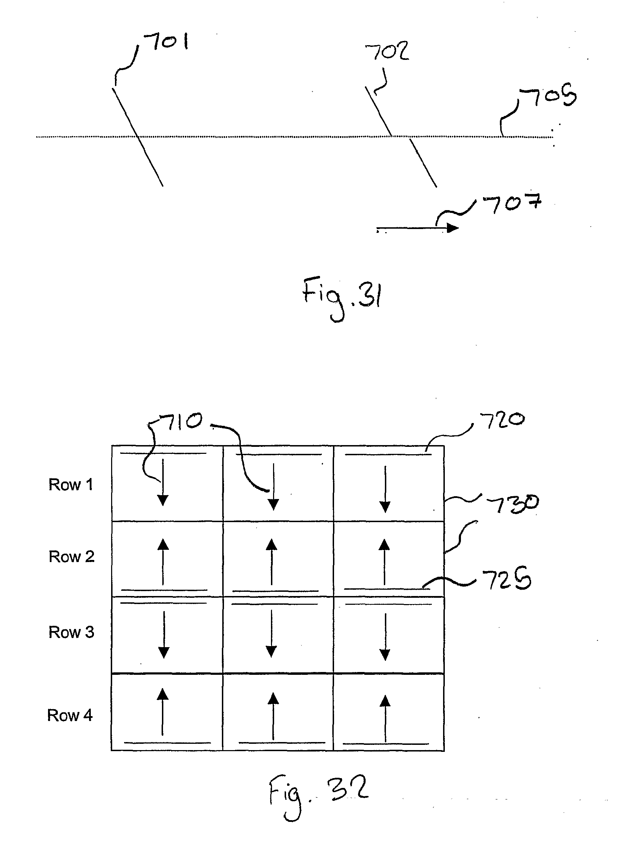

This behaviour is schematically illustrated in Figure 31, where on the left hand side of the diagram a stationary line 701 is shown to be consistently represented over a tile boundary 705, and on the right hand side of the diagram a moving line 702 (moving in the direction shown by the arrow 707) is shown to suffer from a discontinuity as it crosses over a tile boundary 705. This effect is particularly visible on a substantially 'seamless' tiled display, because visible seams help to distract the eye from this particular discontinuity in the image.

Figure 32 schematically illustrates an arrangement of a tiled display which disguises the motion artefacts by rotating every other row of panels 730 in the tiled array by 180 degrees, and presenting inverted image information to these 'upside down' panels 730 in order to result in an 'upright' final image. Rotating the panels 730 in every other row by 180 degrees in the plane of the panel 730 ensures that the top line 720 of one display panel 730 is refreshed at the same time as the bottom line 725 of the display panel 730 directly above it. The display panels 730 will still scan in the usual way, but the lines at the boundary between two panels will always be updated at the same time on both panels. An alternative arrangement which would provide a similar effect is, rather than rotating the panels of every other row, to change the pixel addressing scheme for every other row to scan from bottom to top rather than from top to bottom.

It can be seen from Figure 32 that the second and third rows of panels both start refreshing with the line adjacent to their adjoining boundary at the beginning of the frame (as indicated by the line 720, 725). Towards the end of the frame (scan direction shown by the arrows 710), each of rows 2 and 3 will refresh lines adjacent to the boundary with their other neighbouring rows (rows 1 and 4 respectively). The panels 730 in rows 1 and 4 will also be refreshing the lines adjacent to these boundaries at the same time, so the discontinuity will not be apparent.

While this alleviates the immediate problem of the discontinuity at the tile boundary, it is not straightforward to apply this to any tiled display product. In the case of conventional LCD panels, the brightness (and contrast) of the display varies with viewing angle. Furthermore, this variation may not be symmetrical about the normal to the display surface. This means that for a conventional (say, twisted nematic LCD) tiled display, there may be visible differences in the performance of the 'upright' and 'upside-down' panels.

If the viewing performance of each panel can be made angularly symmetric about the normal to the display surface then this solution can be implemented without visible side effects.

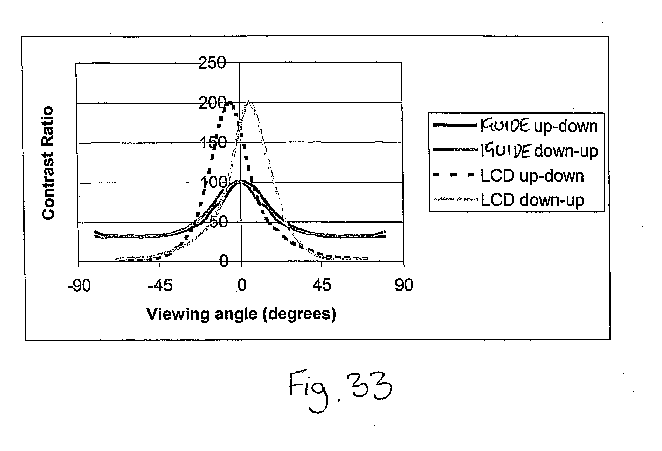

Figure 33 schematically illustrates the degree of angular asymmetry of an image guide and an LCD panel. Specifically, Figure 33 graphically illustrates the contrast ratio exhibited by the image guide and LCD panel as a function of viewing angle. It can be seen that both the LCD panels and the image guides naturally exhibit the same normal incidence contrast whether they are upside down or not. However, when viewed at (say) 5 degrees from the normal, an upright LCD panel will exhibit contrast of about 200:1 while the adjacent (upside down) LCD will exhibit nearer 100:1 contrast. This means a 2:1 1 contrast in brightness between panels. On the other hand, the image guide has a much more symmetrical performance, the contrast at +x degrees being very similar to that at -x degrees, so in a display using image guides it should not be noticeable to a viewer that every other row of panels is upside down, whichever the angle of view.

Other methods of disguising or removing the motion artefacts discussed above include image processing (temporal interpolation) of each image frame or incurring a delay of one frame time between each row of panels. The latter method could involve, for example, making the third row down in a tiled display begin frame one when the top row begins frame three. This would satisfy the avoidance of a discontinuity at the boundary between rows without turning the LCD panels upside down, but would cause an apparent 'tilt' on the image as it moves, and create a lip-sync problem with the sound system on the display, since the lower rows would be showing an image that was shown on the top row several frames (perhaps, for a large display, 100s of milliseconds) earlier. Additionally, modification of the display panel drive scheme could be implemented to change the refresh pattern of the display panels.

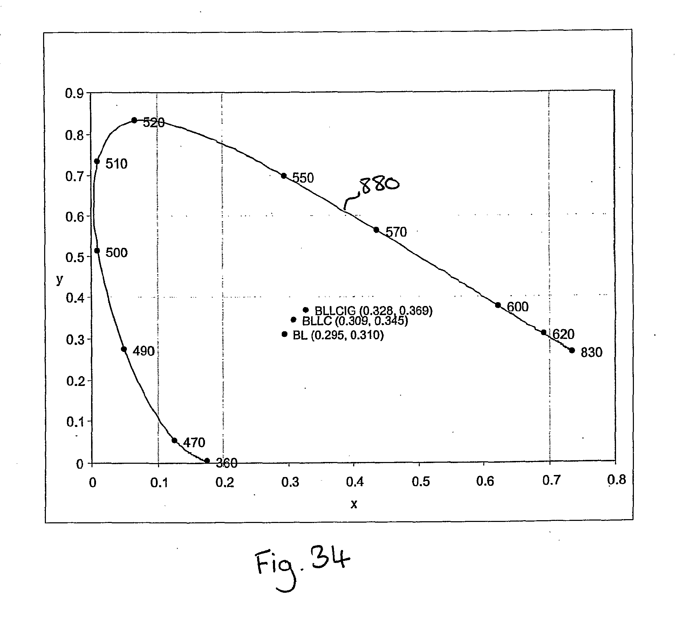

Figure 34 schematically illustrates how variable attenuation across the spectrum of light passing through a display from a backlight to the viewing surface can cause a shift of the perceived colour of the "white point" of a display to the extent that the viewer no longer perceives it as white. The "white point" is the colour value (for instance Red, Green, Blue (RGB) value or colour temperature in Kelvin) defined to be white, on a colour display. The white point will usually constitute the maximum value of each colour component (for instance RGB) used in the display. The white point of a display can be defined and plotted on a chromaticity diagram using, for instance, the CIE 1931 standard. It is this standard which is used in Figure 34.

The CIE 1931 standard represents the range of colours perceivable to the human eye using a luminance parameter, and two chromaticity parameters x and y. The axis parameters x and y form part of a 3-axis representation which also includes a parameter z. However, in the CIE 1931 standard, x + y + z = 1, and so the value of z is known for any given combination of values of x and y and therefore provides no additional information. A two dimensional representation is therefore sufficient to represent chromaticity.

The curved line 880 plotted on Figure 34 represents the range of spectral colours (i.e. those colours composed of a single wavelength), the wavelength in nanometres (nm) being plotted at discrete points along the curve 880. Any given point inside the curve 880 represents a colour composed of a mixture of wavelengths. All points outside the area defined by the curve 880 relate to colours not perceivable by the human eye.

The "white point" of light emitted from the backlight is illustrated in Figure 34 by the plot point BL at co-ordinates (0.295, 0.310). The white point of this light after transmission through an example LC display panel is illustrated by the plot point BLLC at co-ordinates (0.309, 0.345). This is a significant spectral shift in the position of the white point. The white point of the light after transmission through both the LC display panel and an example image guide is illustrated by the plot point BLLCIG at co-ordinates (0.328, 0.369). Once again, this is a significant spectral shift of the white point. The result of this shifting, which is towards the yellow region of the chromaticity diagram, will be a yellow cast to displayed images.

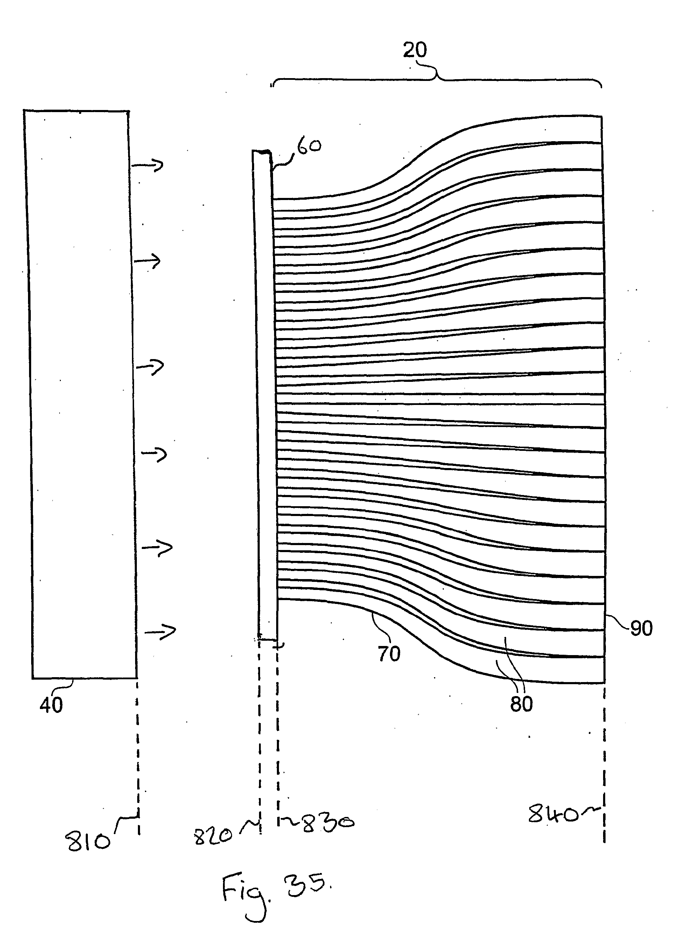

In Figure 35, an optical path through a display, from a backlight 40 through to a viewing surface 90, through which variable attenuation (as a function of wavelength) of light occurs, is schematically illustrated. Light having a predetermined emission spectrum is emitted from the backlight 40. The emitted light crosses an interface 810 between the light emitting surface of the backlight 40, and another medium, which may for instance comprise air, or may comprise other optical elements such as polarising elements. A fraction of the light generated in the backlight 40 may be reflected at the interface 810 back into the backlight. This is termed a "reflection loss". A second interface 820 occurs between the medium through which light is currently propagating and the input surface of a display device 60 such as an LC panel. As before, reflection losses may occur at this interface. The final two interfaces illustrated in Figure 35 are an interface 830 between the output surface of the display device 60 and the input surface of an image guide 20, and an interface 840 between the output surface of the image guide 20 and the outside of the display. Further reflection losses may occur at these interfaces 830, 840.

The proportion of incident light which is reflected back at the interfaces 810-840 will depend principally on the angle of incidence of the light with respect to each interface (the proportion of reflected light is lowest at normal incidence), and the difference in refractive index between the materials at either side of the interface. The greater the difference in refractive index, the greater the proportion of light reflected back at the interfaces 810-840. Further, where imperfections are present on surfaces disposed along the optical path between the backlight 40 and the viewing surface 90, the scattering of incident light caused by these imperfections is dependent on the refractive index of the imperfect surfaces.

The refractive index of most glasses and polymers, for instance injection moulded polycarbonate, suitable for use in the manufacture of displays increases as a function of decreasing wavelength of light. It can therefore be understood that the proportion of light scattered or reflected back at the interfaces 810-840 will not be uniform across the whole spectrum of light generated by the backlight 40. For polymers having a refractive index which increases as a function of decreasing wavelength, most losses will occur in the blue region of the spectrum, resulting in a shift in the white point of the display towards the yellow region of the spectrum, and accordingly contributing a yellow cast to a displayed image.

The light transmissive regions between the interfaces 810-840 may absorb a proportion of the light passing through them. Once again, the polymer materials typically used in displays absorb light more strongly in the blue region of the visible spectrum, further contributing to the shift of the white point of the display towards the yellow region of the spectrum.

Additionally, other light colouration effects may occur during transmission of light through the display device 60 and any polarising layers within the optical path due to preferential transmission of light of certain wavelengths.

As a result of the above effects, the combined transmission of optical elements, such as the LC display device 60 and the image guide 20, along an optical path from the backlight to the viewing surface of a display will be non-uniform across the spectrum of the light. As illustrated in Figure 34, this results in a change in the white point of the display.

It has been recognised that by biasing the emission spectrum of the backlight, the variable transmission of light can be compensated for, resulting in the white point of the display being configurable to a desired value. In the present example, where use of a conventional phosphor-based backlight having an emission spectrum providing a "white source" would result in a display having a yellow cast by virtue of preferential absorption of blue wavelength light, an increase in the amount of blue phosphor in the backlight can be used to bring the white point of the display back to a desired white point. In more general terms, a well defined mixture of tri-phosphors in the backlight source lamps can be used to counteract the effects of the system spectral transmission on the colour of an outputted image.

This technique involves the distortion of the spectrum of the backlight to compensate for these wavelength-dependent losses, so that the white state of light emitted from the output surface of the display achieves a desired value.

By measuring the combined spectral transmission of the system, it is possible to calculate the required correction to be applied to the backlight. Specifically, by integrating over the normalised emission of the individual phosphors, it is possible to isolate the effect of each phosphor on the white state of the display. By combining the system transmission with the resultant backlight white state, the change to the appearance of the display white point can be calculated. Subsequent relative weighting of the fractions of the individual phosphors can be used to correct for the system spectral transmission, to provide a desired display white point.

The following annex, comprising statements of aspects of the invention, is provided so as to provide basis for amendments using the original claims.

**ANNEX**

1. A display comprising:

a display device having an image output surface at which an image is displayed as a spaced array of pixel elements;
an image guide coupled to the image output surface of the display device and comprising a plurality of light transmission guides each having an input end and an output end, the input ends of the light transmission guides being arranged relative to one another so that groups of one or more light transmission guides receive light from respective groups of one or more pixel elements;

in which, for a cluster comprising at least a subset of the light transmission guides:

at the outer periphery of the cluster, the input ends of the light transmission guides are surrounded by an inner frame having optical properties substantially similar to the optical properties of the light transmission guides and having an input surface arranged to receive light from the image output surface of the display device, and an outer frame having thermal expansion properties substantially similar to the thermal expansion properties of the light transmission guides,
the inner frame being optically coupled to each light transmission guide adjacent thereto and comprising a reflective layer covering at least the surfaces of the inner frame opposite to the input surface of the inner frame and the surfaces of the inner frame adjacent to the outer frame, light entering the inner frame and impinging on the reflective layer being reflected to exit the inner frame via the portion of the inner frame optically coupled to adjacent light transmission guides or via the input face of the inner frame.

2. A display according to statement 1, wherein the inner frame comprises a plurality of light transmission guides, the reflective coating covering substantially all surfaces of each light transmission guide in the inner frame other than the portion of each light transmission guide in the inner frame optically coupled to adjacent light transmission guides, and the input face of each light transmission guide in the inner frame.

3. A display according to statement 2, wherein the plurality of light transmission guides in the inner frame are formed into a plurality of adjacent rows along each side of the inner frame, each row being optically coupled to an adjacent row.

4. A display according to statement 2 or statement 3, wherein the light transmission guides in the inner frame are truncated at their output end.

5. A display according to statement 1, wherein the inner frame comprises a continuous boundary of material.

6. A display according to any one of statements 1 to 5, wherein the reflective layer is a deposited metal layer.

7. A display according to any one of statements 1 to 5, wherein the reflective layer is a metallic adhesive tape.

8. A display comprising:

a display device having an image output surface at which an image is displayed as a spaced array of pixel elements;
a light transmitting element having a viewing surface, the light transmitting element arranged to receive light from the display device and display the received light on the viewing surface;
the light transmitting element having a polarising layer arranged in an optical path between the display device and the viewing surface;

wherein the polarising layer is arranged to attenuate unpolarised ambient light received from outside the display while substantially transmitting polarised light received from the display device.

9. The display of statement 8, wherein the polarising layer is optically coupled to a face of the light transmitting element.

10. The display of statement 9, wherein the polarising layer is optically coupled to the face of the light transmitting element adjacent the display device.

11. The display of statements 8, 9 or 10, wherein the light transmitting element is a transparent sheet.

12. The display of statement 11, wherein the transparent sheet is a glass sheet or a plastic sheet.

13. The display of statement 12, wherein the transparent sheet is a touch panel or a loudspeaker device.

14. The display of statements 8 to 13, further comprising an antireflective layer coupled to the face of the light transmitting element at the image output surface of the display.

15. The display of statement 14, further comprising an antireflective layer coupled onto the polarising layer of the light transmitting element.

16. The display of any one of statement 8 to 15, wherein the light transmitting element is an image guide comprising a plurality of light transmission guides each having an input end and an output end, the input ends of the light transmission guides being arranged to receive light from respective groups of one or more of the pixel elements.

17. The display of statement 16, further comprising a polarising layer coupled to the display device and aligned to the polarising layer of the light transmitting element.

18. The display of statement 16 or 17, further comprising a phase modulator coupled to the polarising layer of the light transmitting element.

19. The display of statement 16 to 18, further comprising a phase modulator coupled to the display device.

20. A backlit display comprising:

a backlight having light emitting regions and non-emitting regions;
a modulator, arranged to receive light emitted from the backlight;
light redirecting means, arranged to redirect a portion of the light emitted from the light emitting regions of the backlight onto areas of the modulator in closest relationship to the non-emitting regions of the backlight.

21. A display according to statement 20, wherein the backlight comprises:

one or more fluorescent lamps, each lamp comprising a continuous light emitting region, at least one end of the continuous light emitting region terminating in a non-light emitting region.

22. A display according to statement 20 or 21, wherein the light redirecting means comprises one or more reflecting elements.

23. A display according to statement 20 to 22, wherein the light redirecting means comprises one or more refracting elements.

24. A display according to statement 20 to 23, wherein the light redirecting means is located between the light emitting regions of the backlight and the modulator.

25. A display according to any one of statement 20 to 22, wherein the light redirecting means is located outside of the light emitting regions of the backlight.

26. A display according to statement 25, wherein the reflecting elements are arranged in a louvered structure to allow airflow between the backlight and the modulator through louvered apertures in the reflecting elements.

27. A display according to any of statements 20 to 26, wherein the light redirecting means comprises a plurality of separate strips of material.

28. A display according to any statements 20 to 26, wherein the light redirecting means comprises a plurality of strips deposited onto, or moulded into, a sheet of optically transparent material.

40. A display comprising:

a plurality of image guides, each image guide comprising a plurality of light transmission guides having an input and an output end, and a base frame having a coefficient of thermal expansion substantially matching that of the light transmission guides, the base frame surrounding the input ends of the light transmission guides;
means for coupling the plurality of image guides into an array in which the output surfaces of the image guides form a continuous surface;
a supporting frame, the supporting frame having greater rigidity than the base frames, and a different coefficient of thermal expansion to the base frames, the base frames being coupled to the supporting frame by a connecting means allowing relative movement between the base frames and the supporting frame in a plane substantially parallel to the output surfaces of the image guides.

41. The display of statement 40, wherein the image guides are directly coupled together.

42. The display of statement 40 or statement 41, wherein the supporting frame comprises struts, the base frames being coupled to the struts.

43. The display of statement 42, wherein the struts are positioned in the cavity formed between adjacent image guides and their respective base frames.

44. The display of statement 42, wherein the struts are at least partially recessed into the base frames.

45. The display of any of statement 40 to 44, wherein the frictional properties of the surfaces of the base frames and any other structures within the display for which there may be differential movement under conditions of thermal expansion are such that the lateral forces which may result from differential expansion with the display are smaller than the force required to distort the base frames.

46. A display comprising:

a display device having an image output surface at which an image is displayed as a spaced array of pixel elements;
an image guide coupled to the image output surface of the display device and comprising a plurality of light transmission guides each having an input end and an output end, the input ends of the light transmission guides being arranged relative to one another so that groups of one or more light transmission guides receive light from respective groups of one or more pixel elements;

in which electrically conductive material is provided between and along at least a portion of the length of at least a subset of the light transmission guides, the electrically conductive material being arranged to absorb electromagnetic radiation emitted from the display device, the electrically conductive material between light transmission guides in separate regions of the image guide being electrically connected together.

47. The display of statement 46, wherein the electrically conductive material comprises carbon-loaded plastic strips.

48. The display of statement 46 or statement 47, wherein the electrically conductive material comprises wire.

49. The display of statement 48, wherein the wire is formed as a wire mesh.

50. The display of any of statement 46 to 49, further comprising a conductive shield surrounding the non-screen area of the display, wherein the electrically conductive material is electrically connected to the electrically conductive shield.

55. A backlit display comprising:

a transmissive display device having an image output surface at which an image is displayed as a spaced array of pixel elements;
the spectral loss of the display device in the visible spectrum being greatest toward the blue end of the visible spectrum; and
a backlight providing illumination of the display device;

in which the emission of light from the backlight in the visible spectrum predominates at the blue end of the visible spectrum.

56. The display of statement 55, comprising a light transmitting element having a viewing surface, the light transmitting element arranged to receive light from the display device and display the received light on the viewing surface.

57. The display of statement 56, wherein the light transmitting element is an image guide coupled to the image output surface of the display device and comprising a plurality of light transmission guides each having an input end and an output end, the input ends of the light transmission guides being arranged relative to one another so that groups of one or more light transmission guides receive light from respective groups of one or more pixel elements.

58. The display of statement 55, 56 or 57, wherein the backlight comprises one or more phosphor lamps.

**Claims**

1. A tiled display, comprising: a plurality of display panels formed into a plurality of rows and arranged to form a single image output surface, each display operable to display a plurality of lines of pixels; display control means, arranged to refresh each display panel on a line by line basis in accordance with a refresh pattern; in which the refresh pattern for pairs of vertically adjacent display panels are such that a lower region of an upper display panel of the pair is refreshed at substantially the same time as an upper region of a lower display panel of the pair.

2. A display according to claim 1, wherein adjacent rows of display panels alternate between, for a first row of display panels, being refreshed on a sequential line by line basis from the top line to the bottom line of each display in the row and, for a second row of display panels, being refreshed on a sequential line by line basis from the bottom line to the top line of each display in the row.

3. A display according to claim 2, wherein the display panels in alternate rows are rotated by 180 degrees with respect to an adjacent row of display panels in the plane of the image output surface, the rotated display panels being provided with an inverted image.

4. A display according to claim 2, wherein successive rows of display panels alternate between using a top to bottom pixel addressing scheme and a bottom to top pixel addressing scheme.

5. A display comprising: a display panel having an image output surface at which an image is displayed as a spaced array of pixel elements; an image guide comprising a plurality of light transmission guides each having an input end and an output end, the input ends of the light transmission guides being arranged to receive light from respective groups of one or more pixel elements, and a base frame surrounding the input ends of the light transmission guides; a first frame having an aperture, the first frame being rigidly attached to the base frame, the display panel being positioned against the image guide within the aperture of the first frame; a second frame having a smaller aperture than the first frame, the second frame overlapping the display panel and applying pressure to the display panel thereby retaining the display panel in close proximity to the image guide, the second frame being elastically coupled to the second frame.

6. A display according to claim 5, wherein the base frame and the first frame are formed together as a single frame.

7. A display according to claim 5 or claim 6, wherein the second frame is less rigid in a direction perpendicular to the plane of the display panel than both of the display panel and the first frame, the second frame being distorted in the direction perpendicular to the plane of the display panel, the distortion resulting in a force being applied by the second frame against the display panel in the direction of the image guide.

8. A display according to any one of claims 5 to 7, wherein the input face of the image guide protrudes from the face of the base frame.

9. A display according to any one of claims 5 to 8, wherein the first frame and the second frame are coupled together via an intermediate layer.

10. A display according to claim 9, wherein the intermediate layer flexibly couples the second frame to the display screen.

11. A display according to any one of claims 5 to 10, wherein the first frame comprises a plurality of separate elements.

12. A display according to any one of claims 5 to 11, wherein the second frame comprises a plurality of separate elements.

13. A display according to claim 12, wherein the second frame overlaps the first frame such that the separate elements of the first frame and second frame are coupled together as a single unit.

14. A display according to any of claims 5 to 13, wherein one or more of the base frame, the first frame and the second frame inhibit light leakage around the edge of the display panel into the image guide.

15. A display according to any of claims 5 to 14, wherein the second frame comprises a light reflecting or diffusing surface on the side facing the backlight, light impinging on the light reflecting or diffusing surface being redirected towards the backlight.

Fig. 1

Fig. 2

EP 2 189 970 A2

Fig. 3

Fig. 4

Fig.5A

Fig.5B

Fig. 6

Fig. 7

Fig. 8

Fig. 9

Fig. 10A

Fig 10B

Fig. 11

Fig. 12A

Fig. 12B

Fig. 12C

310                          380

360

300

Fig. 13

380                          300

310

360

Fig. 14

Fig. 15A

Fig. 15B

Fig. 16

Fig. 17

Fig. 18

470

410

471

Fig. 19

470

410

420

425

415

495

Fig. 20

Fig . 21

510    530    570

520

100

47.5    50

2.5

Aligned
polarisers

LCD intensity    LCD intensity-5%

5%

Fig. 22

510    530    570

Aligned
polariser

Fig. 23

Fig. 24

Fig. 25

585

580
590

595

Fig. 27

520'
510'

521

585

580
590

520'
510'

521

Fig. 26

EP 2 189 970 A2

Fig. 28

39

Fig. 29

Fig. 30

60

70

80

90

80

640

Fig.31

Fig. 32

Fig. 33

Fig. 34

Fig. 35.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4139261 A, Hilsum